# EUROPEAN PATENT APPLICATION

(11) **EP 4 318 507 A1**
(43) Date of publication of application: **07.02.2024**
(21) Application number: 22775916.4
(22) Date of filing: 18.02.2022
(51) Int. Cl.: H01F 7/02, H01F 7/08, H04N 5/232, H04N 5/225, G03B 5/00, G03B 3/10, G03B 13/34, G02B 7/182, G02B 7/28

(54) **ACTUATOR DEVICE**

(30) Priority: 24.03.2021 KR 20210038361; 24.03.2021 KR 20210038362
(71) Applicant: LG Innotek Co., Ltd., Seoul 07796 (KR)
(72) Inventor: LEE, Sung Guk, Seoul 07796 (KR)
(74) Representative: DREISS Patentanwälte PartG mbB
(86) International application number: PCT/KR2022/002471
(87) International publication number: WO 2022/203214

(57) **Abstract**

The present embodiment relates to an actuator device comprising: a housing; a holder disposed inside the housing; a reflective member disposed on the holder; a moving plate disposed between the housing and the holder; a rigid mover coupled to the holder; a first magnet disposed on the rigid mover; a second magnet disposed in the housing and generating a repulsive force with the first magnet; and a driving unit for tilting the holder, wherein with respect to a first optical axis, the central axis of the first magnet is disposed to be eccentric with the central axis of the moving plate.

## Description

### [Technical Field]

The present embodiment relates to an actuator device.

### [Background Art]

A camera device is a device that photographs a picture or video of a subject, and is installed in optical devices such as smartphones, drones, and vehicles.

In recent camera devices, there is a demand for optical image stabilization (OIS) function that corrects image shake caused by user movement to improve image quality, auto focus (AF) function that automatically adjusts the distance between the image sensor and the lens to align the focal length of the lens, and a zoom function that increases or decreases the magnification of a distant subject through a zoom lens.

### [Detailed Description of the Invention]

### [Technical Subject]

The present embodiment is intended to provide an actuator device in which an OIS function is implemented through tilting of a reflective member.

Further, it is intended to provide an actuator device in which the performance of the first axis tilt driving is improved.

Furthermore, it is intended to provide an actuator device in which stable driving performance of a moving part is secured.

### [Technical Solution]

The actuator device according to the present embodiment comprises: a housing; a holder disposed inside the housing; a reflective member disposed on the holder; a moving plate disposed between the housing and the holder; a rigid mover coupled to the holder; a first magnet disposed on the rigid mover; a second magnet disposed in the housing and generating a repulsive force with the first magnet; and a driving unit for tilting the holder, wherein with respect to a first optical axis, the central axis of the first magnet may be disposed to be eccentric with the central axis of the moving plate.

With respect to a facing surface, the horizontal axis passing through the central axis of the first magnet may be eccentric in a direction of a horizontal axis passing through the central axis of the moving plate and a second optical axis perpendicular to the first optical axis.

With respect to the facing surface, a vertical axis passing through the central axis of the first magnet may not be eccentric in a direction of a vertical axis and the horizontal axis passing through the central axis of the moving plate.

A portion of the housing may be disposed between the moving plate and the rigid mover.

The housing may comprise two holes into which the rigid mover is inserted.

The horizontal axis of the first magnet may be disposed higher than the horizontal axis of the moving plate.

At least a portion of the second magnet may be disposed between the first magnet and the moving plate.

The moving plate may be disposed between the rigid mover and the holder.

The driving unit comprises a first driving unit and a second driving unit, wherein the first driving unit comprises a first driving magnet and a first coil, and wherein the second driving unit may comprise a second driving magnet and a second coil.

The first driving unit may tilt the holder with respect to a first axis of the moving plate.

The second driving unit may tilt the holder with respect to a second axis perpendicular to the first axis of the moving plate.

The center of the second magnet may be disposed at the same height as the center of the first magnet.

The housing comprises a second portion disposed above the holder and a third portion disposed below the holder, wherein the holder is moved between the second portion and the third portion of the housing by the first driving unit, and wherein in an initial state in which current is not applied to the first driving unit, the holder may be in contact with the housing.

A first direction driving current is applied to the first coil to drive the first coil, and a second direction driving current opposite to the first direction driving current may not be used to drive the first coil.

The first axis of the moving plate may be defined by a first protrusion of the moving plate and a groove of the housing.

The moving plate comprises a first surface facing the housing and a second surface facing the holder, wherein the first surface of the moving plate comprises a plurality of first protrusions spaced apart from each other in the direction of the first axis, and wherein the second surface of the moving plate may comprise a plurality of second protrusions spaced apart from each other in a direction of the second axis.

The housing comprises a plurality of grooves in which the plurality of first protrusions are disposed, wherein the plurality of grooves of the housing may comprise a first groove being in contact with one first protrusion among the plurality of first protrusions at four points, and a second groove being in contact with another first protrusion among the plurality of first protrusions at four points.

The holder comprises a plurality of grooves in which the plurality of second projections is being disposed, wherein the plurality of grooves of the holder may comprise: a first groove being in contact with one second protrusion among the plurality of second protrusions at four points, and a second groove being in contact with another second protrusion among the plurality of second protrusions at two points

It comprises a substrate disposed on the housing, wherein the first driving magnet is disposed on a lower surface of the holder, and wherein the first coil may be disposed on the substrate at a position corresponding to the first driving magnet.

The second driving magnet comprises: a first sub-magnet disposed on a first side surface of the holder; and a second sub-magnet disposed on a second side surface of the holder, wherein the second coil may comprise: a first sub coil disposed on the substrate and disposed at a position corresponding to the first sub-magnet; and a second sub-coil disposed on the substrate and disposed at a position corresponding to the second sub-magnet.

The holder comprises: a first protrusion formed on an upper surface of the holder; and a second protrusion formed on a lower surface of the holder, wherein in the initial state, the first projection of the holder is in contact with the second portion of the housing, and wherein the second protrusion of the holder may be in contact with the third portion of the housing by applying a current to the first driving unit or by impact.

The moving plate may be disposed between the first magnet and the holder.

The first magnet and the second magnet may be disposed between the rigid mover and the moving plate.

A camera device according to the present embodiment may comprise a printed circuit board; an image sensor disposed on the printed circuit board; an actuator device; and a lens disposed in an optical path formed by the reflective member and the image sensor of the actuator device.

The optical device according to the present embodiment comprises: a main body; a camera device of claim 24 disposed on the main body; and a display disposed on the main body and outputting at least one of a video and an image photographed by the camera device.

The actuator device according to the present embodiment comprises: a fixed part; a moving part that moves against the fixed part; a moving plate disposed between the fixed part and the moving part; a first magnet disposed in the moving part; a second magnet disposed in the fixed part and generating a repulsive force with the first magnet; and a driving unit for tilting the moving unit with respect to the x-axis and y-axis perpendicular to each other of the moving plate, wherein a horizontal axis passing through the center of the second magnet may be disposed to be eccentric with the x-axis of the moving plate in the y-axis direction.

The moving plate may comprise a plurality of first convex portions formed on one surface and a plurality of second convex portions formed on the other surface.

The x-axis may correspond to a straight line connecting two convex portions among the plurality of first convex portions.

The y-axis may correspond to a straight line connecting two convex portions among the plurality of second convex portions.

The center of the second magnet may not be eccentric with the y-axis in a direction passing through the x-axis.

When viewed from the moving plate toward the first magnet, the center of the second magnet may be disposed to coincide with the y-axis.

The driving unit may comprise a first driving unit and a second driving unit, wherein the first driving unit may comprise a first driving magnet and a first coil, and the second driving unit may comprise a second driving magnet and a second coil.

A central portion of the second magnet may be disposed at the same height as a central portion of the first magnet.

The fixed part comprises: a second portion disposed on the moving part, and a third portion disposed below the moving part, wherein the moving part is moved between the second portion and the third portion of the fixed part by the first driving magnet and the first coil, and wherein in an initial state in which no current is applied to the first coil, the moving part may be in contact with the second portion of the fixed part.

The actuator device according to the present embodiment comprises: a fixed part; a moving part moving against the fixed part; a moving plate disposed between the fixed part and the moving part; a first magnet disposed on the moving part; a second magnet disposed on the fixed part; and a driving unit for tilting the moving part, wherein a portion of the fixed part is disposed between the moving plate and the second magnet, and wherein in an initial state in which no current is applied to the driving unit, the moving part may be in contact with the fixed part.

The fixed part may comprise a housing, wherein the moving part may comprise a holder disposed in the housing, and wherein in an initial state in which no current is applied to the driving unit, the holder may be in contact with a top plate of the housing.

The actuator device according to the present embodiment comprises: a housing; a holder disposed inside the housing; a reflective member disposed on the holder; a moving plate disposed between the housing and the holder; a rigid mover coupled to the holder; a first magnet disposed on the rigid mover; a second magnet disposed in the housing and generating a repulsive force with the first magnet; and a driving unit for tilting the holder, wherein in an initial state in which no current is applied to the driving unit, the holder may be in contact with the housing.

In the initial state, the holder may be in contact with the inner surface of the housing adjacent to the incident surface of the reflective member.

As a current is applied to the driving unit, the holder may be spaced apart from the inner surface of the housing and may be tilted with respect to a first axis of the moving plate.

The housing comprises a second portion disposed above the holder and a third portion disposed below the holder, wherein the holder may be moved between the second portion and the third portion of the housing by the driving unit.

The actuator device according to the present embodiment may comprise: a housing; a holder disposed inside the housing; a reflective member disposed on the holder; a moving plate disposed between the housing and the holder; a rigid mover coupled to the holder; a first magnet disposed on the rigid mover; a second magnet disposed on the housing; and a driving unit for tilting the holder, wherein the moving plate is disposed between the holder and the first magnet, and wherein the size of the first magnet may be different from the size of the second magnet.

The area of the first surface of the first magnet is larger than the area of the second surface of the second magnet facing the first surface, and when viewed from the second magnet toward the first magnet, an edge region of the second magnet may be disposed inside the first surface of the first magnet.

Central axes of the first magnet and the second magnet may coincide with each other.

The actuator device according to the present embodiment comprises: a fixed part; a moving part moving against the fixed part; a moving plate disposed between the fixed part and the moving part; a first magnet disposed in the moving part and having a first surface; a second magnet disposed in the fixed part and having a second surface facing the first surface; and a driving unit that tilts the moving part, wherein in a direction perpendicular to the first surface, the central axis of the first magnet is disposed to be eccentric with the central axis of the moving plate, and wherein the area of the first surface of the first magnet may be greater than the area of the second surface of the second magnet.

The actuator device according to the present embodiment comprises: a fixed part; a moving part moving against the fixed part; a moving plate disposed between the fixed part and the moving part; a first magnet disposed on the moving part; a second magnet disposed on the fixed part; and a driving unit that tilts the moving part, wherein a portion of the fixed part is disposed between the moving plate and the second magnet, wherein in an initial state in which no current is applied to the driving unit, the moving part is in contact with the fixed part, and wherein when viewed from the second magnet toward the first magnet, an edge of the first magnet may surround the second magnet.

When viewed from the second magnet toward the first magnet, the second magnet may be disposed inside a corner of the first magnet.

The actuator device according to the present embodiment comprise: a housing; a holder disposed within the housing; a reflective member disposed on the holder; a moving plate disposed between the housing and the holder; a rigid mover coupled to the holder; a first magnet disposed on the rigid mover; and a second magnet disposed in the housing and generating a repulsive force with the first magnet, wherein the first magnet may be formed in a size different from that of the second magnet.

The first magnet may be formed to be larger than the second magnet.

The first magnet comprises a first surface, wherein the second magnet comprises a first surface facing the first surface of the first magnet, and wherein the area of the first surface of the first magnet may be greater than the area of the first surface of the second magnet.

Each of the first surface of the first magnet and the first surface of the second magnet may be formed in a square shape.

The first surface of the first magnet comprises a first side, wherein the first surface of the second magnet comprises a first side disposed in a direction corresponding to the first side of the first magnet, and wherein the first side of the second magnet may be 55% to 75% of the first side of the first magnet.

The first surface of the first magnet comprises a first side, wherein the first surface of the second magnet comprises a first side disposed in a direction corresponding to the first side of the first magnet, and wherein the first side of the second magnet may be 60% to 66% of the first side of the first magnet.

The area of the first surface of the second magnet may be 30% to 50% of the area of the first surface of the first magnet.

The area of the first surface of the second magnet may be 35% to 45% of the area of the first surface of the first magnet.

The first magnet and the second magnet may be formed to have the same thickness.

The volume of the second magnet may be 30% to 50% of the volume of the first magnet.

The first magnet may be disposed so that all regions of the second magnet are overlapped with the first magnet in a first direction in which the first magnet faces the second magnet.

The first magnet comprises a first surface facing the second magnet and a second surface opposite to the first surface, wherein the first surface of the first magnet comprises a first side and a second side shorter than the first side, wherein the first side of the first magnet is formed to be 1mm to 5mm, wherein the second side of the first magnet is formed to be 0.8mm to 4mm, and wherein the thickness between the first surface and the second surface of the first magnet may be 0.1 mm to 0.5 mm.

Each of the first magnet and the second magnet may have a circular cross-section.

One or more of the first magnet and the second magnet may be formed to have rounded edges.

A camera device according to the present embodiment may comprise: a printed circuit board; an image sensor disposed on the printed circuit board; actuator device; and a lens disposed in an optical path formed by the reflective member of the actuator device and the image sensor.

An optical device according to the present embodiment may comprise: a main body; a camera device disposed in the main body; and a display disposed in the main body and outputting any one or more of a video and an image photographed by the camera device.

The actuator device according to the present embodiment comprises: a housing; a holder disposed inside the housing; a reflective member disposed on the holder; a moving plate disposed between the housing and the holder; a rigid mover coupled to the holder; a first magnet disposed on the rigid mover; and a second magnet disposed in the housing and generating a repulsive force with the first magnet, wherein at least a portion of the second magnet is disposed between the first magnet and the moving plate, and wherein the first magnet may be disposed such that all regions of the second magnet are being overlapped with the first magnet in a first direction in which the first magnet faces the second magnet.

Each of the first magnet and the second magnet may have a square cross-section in at least a portion of the magnet and may be formed to have rounded edges.

The first magnet and the second magnet may be formed to have the same thickness.

The first magnet comprises a first surface facing the second magnet, and a second surface opposite to the first surface, wherein the first surface of the first magnet comprises a first side and a second side shorter than the first side, wherein the first side of the first magnet is formed to be 1 mm to 5 mm, and the second side of the first magnet is formed to be 0.8 mm to 4 mm, and wherein the thickness between the first surface and the second surface of the first magnet may be 0.1 mm to 0.5 mm.

The actuator device according to the present embodiment comprises a housing; a holder disposed within the housing; a reflective member disposed on the holder; a moving plate disposed between the housing and the holder; a rigid mover coupled to the holder; a first magnet disposed on the rigid mover; and a second magnet disposed in the housing and generating a repulsive force with the first magnet, wherein the second magnet may be formed to be larger than the first magnet.

### [Advantageous Effects]

Through the present embodiment, the poor performance of the first axis tilt driving may be improved.

Furthermore, it is possible to fundamentally block the problem of the moving plate being separated and removed during the driving of a first axis.

In more detail, when the first axis is driven through the eccentric disposement of the repulsive magnet, the current in the direction in which the moving plate can be separated and removed is not used, and only the current in the opposite direction can be used.

Stable driving performance of moving parts can be secured through the present embodiment.

Especially, even when the force for the first axis tilting and the force for the second axis tilting are excessively applied, the separation and removal phenomenon of the moving plate can be prevented.

### [Brief Description of Drawings]

FIG. 1 is a perspective view of a camera device according to the present embodiment.
FIG. 2 is a bottom perspective view of a camera device according to the present embodiment.
FIG. 3 is a flat surface diagram of a camera device according to the present embodiment.
FIG. 4 is a cross-sectional view taken along line A-A of FIG. 3.
FIG. 5 is a cross-sectional view taken along line B-B of FIG. 3.
FIG. 6 is a cross-sectional view taken along line C-C of FIG. 3.
FIG. 7 is an exploded perspective view of a camera device according to the present embodiment.
FIG. 8 is a perspective view in which the cover member is omitted from a camera device according to the present embodiment.
FIG. 9 is a perspective view of a reflective member driving device according to the present embodiment.
FIG. 10 is an exploded perspective view of a reflective member driving device according to the present embodiment.
FIG. 11 is a bottom exploded perspective view of a reflective member driving device according to the present embodiment.
FIGS. 12 and 13 are diagrams for explaining a structure related to a moving plate of a reflective member driving device according to the present embodiment.
FIG. 14 is a perspective view of a state in which the configuration of a moving part of a reflective member driving device according to the present embodiment is omitted.
FIG. 15 is a perspective view of the reflective member driving device of FIG. 14 in a state in which components such as a substrate are omitted.
FIG. 16 is a perspective view illustrating a fixed part and related configuration of a reflective member driving device according to the present embodiment.
FIG. 17 is a perspective view illustrating a state in which a moving part is disposed in a fixed part in a reflective member driving device according to the present embodiment.
FIG. 18 is an exploded perspective view illustrating the related shapes of a rigid mover and the fixed part of a reflective member driving device according to the present embodiment.
FIG. 19 is a perspective view illustrating an disposement state of a second magnet of a fixed part of a reflective member driving device according to the present embodiment.
FIG. 20 is a perspective view illustrating a coupling state between a holder of a reflective member driving device and a rigid mover according to the present embodiment.
FIG. 21 is a front view illustrating a holder of a reflective member driving device according to the present embodiment.
FIG. 22 is a perspective view illustrating a rigid mover, a first magnet, and a second magnet of a reflective member driving device according to the present embodiment.
FIG. 23 is a perspective view illustrating a first magnet, a second magnet, and a driving unit of a reflective member driving device according to the present embodiment.
FIG. 24 is a perspective view illustrating a first magnet, a second magnet, and a driving magnet of a reflective member driving device according to the present embodiment.
FIG. 25 is a side view illustrating a first magnet, a second magnet, and a driving magnet of a reflective member driving device according to the present embodiment.
FIG. 26 is a cross-sectional view of a reflective member driving device according to the present embodiment.
FIG. 27 is a cross-sectional perspective view of a reflective member driving device according to a modified example.
FIG. 28 is a perspective view (a) and a rear side view (b) illustrating a first magnet and a second magnet of a reflective member driving device according to the present embodiment.
FIG. 29 is a perspective view illustrating a state in which a moving plate is disposed in a moving part of a reflective member driving device according to the present embodiment.
FIG. 30 and 31 are diagrams for explaining the tilt about the x-axis of a reflective member driving device according to the present embodiment.
FIGS. 32 to 34 are views for explaining a tilt about the y-axis of a reflective member driving device according to the present embodiment.
FIG. 35 is a perspective view of a lens driving device according to the present embodiment.
FIG. 36 is a perspective view in which some configurations of a lens driving device according to the present embodiment are omitted.
FIG. 37 is a perspective view of a lens driving device in the state illustrated in FIG. 36 as viewed from another direction.
FIG. 38 is a perspective view in which some configurations of a lens driving device according to the present embodiment are omitted.
FIG. 39 is a perspective view of a state in which configurations such as a substrate and a coil are omitted in a lens driving device according to the present embodiment.
FIG. 40 is a perspective view of a state in which the first lens and related components are omitted in the lens driving device of the state illustrated in FIG. 39.
FIG. 41 is a perspective view and a partially enlarged view of a part of a lens driving device according to the present embodiment.
FIG. 42 is a diagram for explaining an disposement structure of a coil and a sensor of a lens driving device according to the present embodiment.
FIG. 43 is a perspective view illustrating a state in which the second housing is omitted in the lens driving device of the state illustrated in FIG. 39.
FIG. 44 is a perspective view of a state in which a guide rail is omitted from the lens driving device of the state illustrated in FIG. 43.
FIG. 45 is an enlarged view of some configurations of a lens driving device according to the present embodiment.
FIG. 46 is a perspective view of a first moving part and a second moving part of a lens driving device according to the present embodiment, and a related configuration thereof.
FIG. 47 is a perspective view of a second moving part of the lens driving device according to the present embodiment and a related configuration.
FIG. 48 is an exploded perspective view of a lens driving device according to the present embodiment.
FIG. 49 is a perspective view of a second housing of a lens driving device according to the present embodiment.
FIGS. 50 and 51 are exploded perspective views of some configurations of a lens driving device according to the present embodiment.
FIG. 52 is a cross-sectional view of a lens driving device according to the present embodiment.
FIGS. 53 to 55 are diagrams for explaining implementation of a zoom function and an autofocus function of a lens driving device according to the present embodiment.
FIG. 56 is a perspective view of a partial configuration of a camera device according to the present embodiment.
FIG. 57 is an exploded perspective view of an image sensor, a filter, and related components of a camera device according to the present embodiment.
FIG. 58 is a perspective view of a front side of an optical device according to the present embodiment.
FIG. 59 is a perspective view of a rear surface of an optical device according to the present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and within the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or disposed in "on (above)" or "below (under)" of each component, "on (above)" or "below (under)" means that it comprises not only the case where the two components are directly in contact with, but also the case where one or more other components are formed or disposed between the two components. In addition, when expressed as "on (above)" or "below (under)", the meaning of not only an upward direction but also a downward direction based on one component may be comprised.

Hereinafter, a reflective member driving device according to the present embodiment will be described with reference to the drawings.

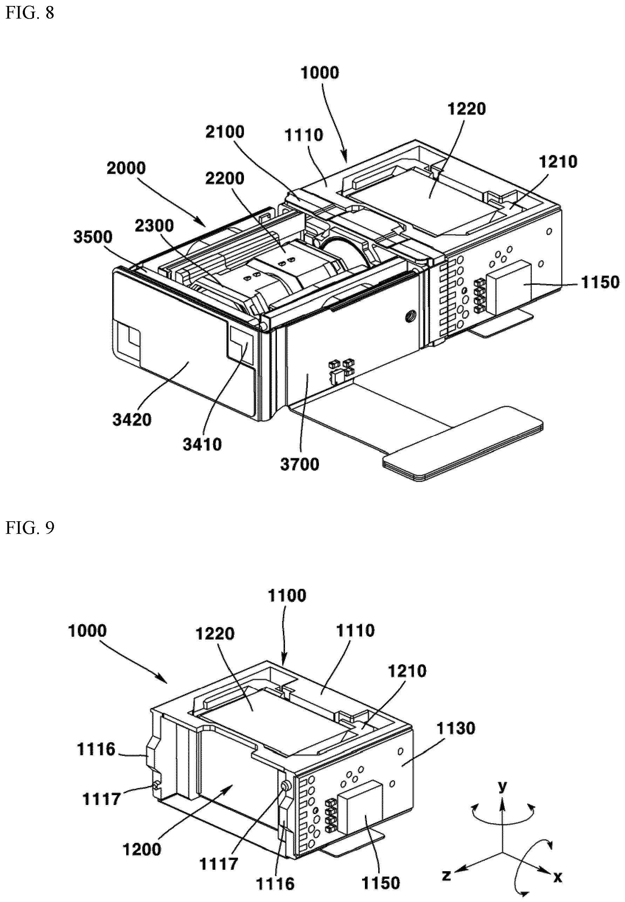

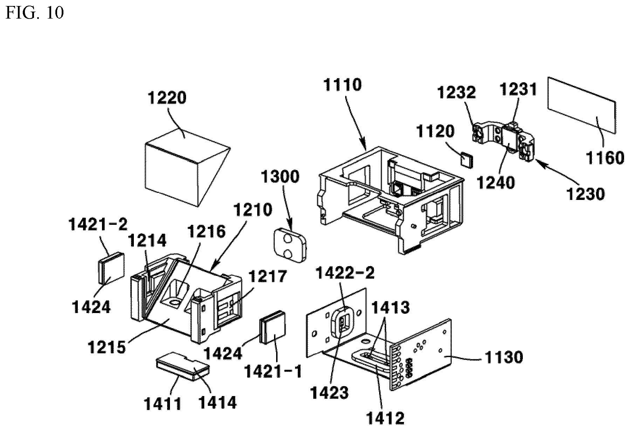

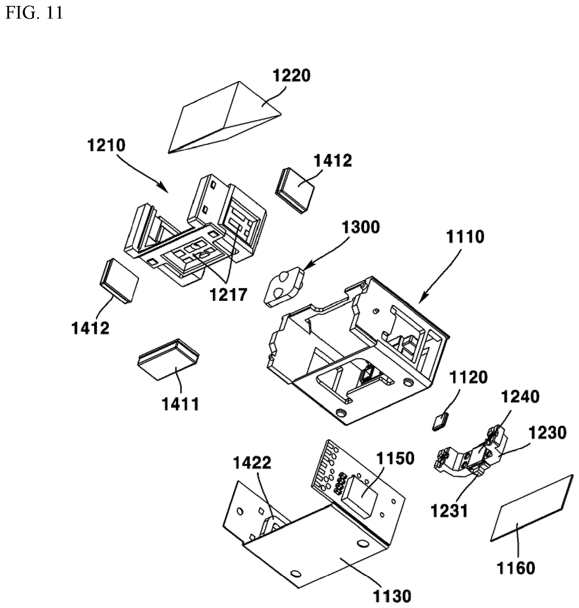

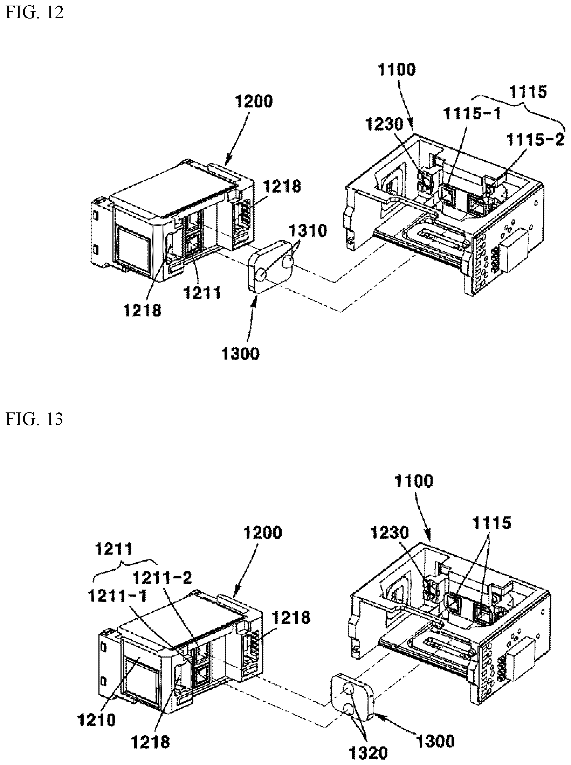

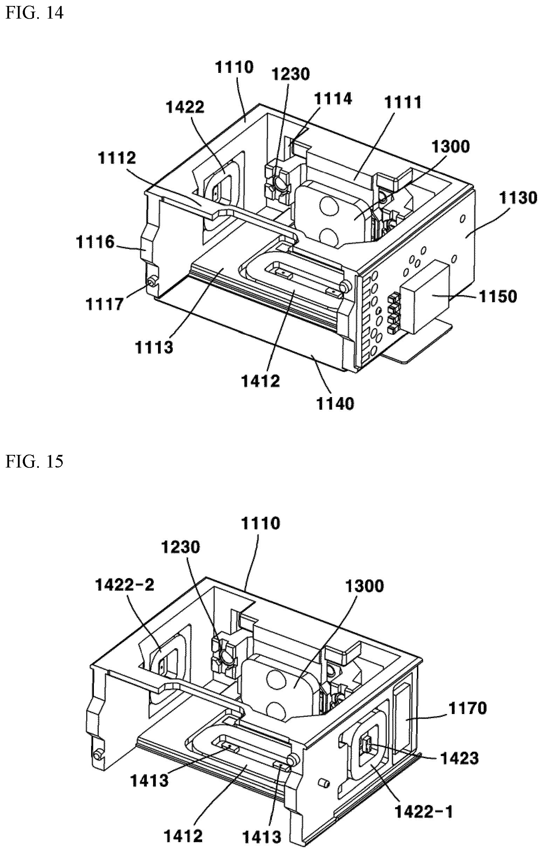

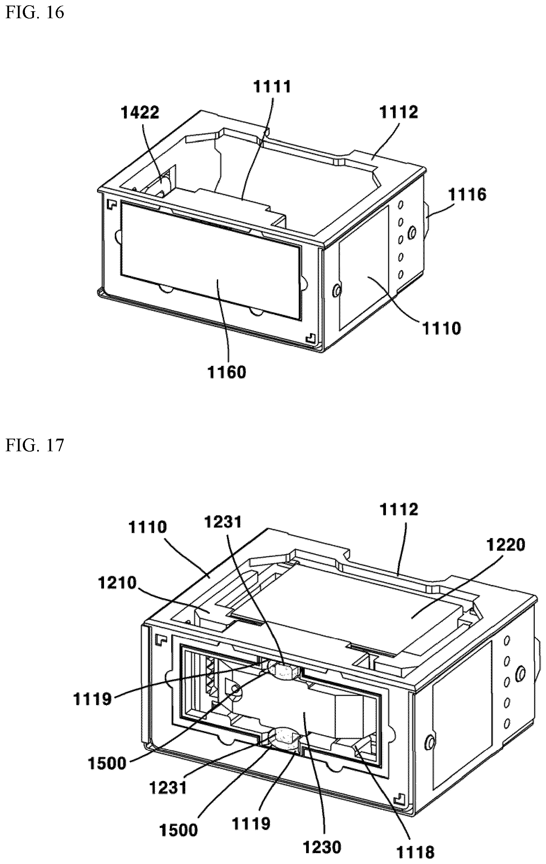

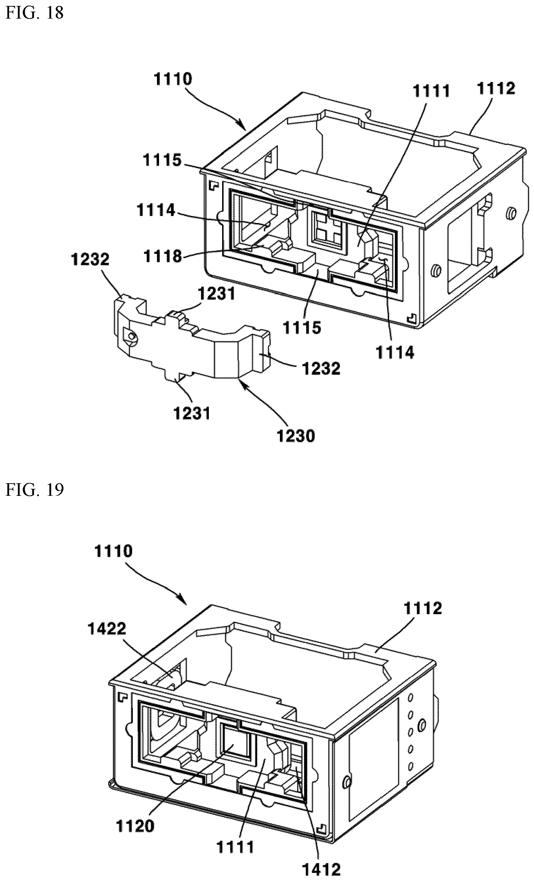

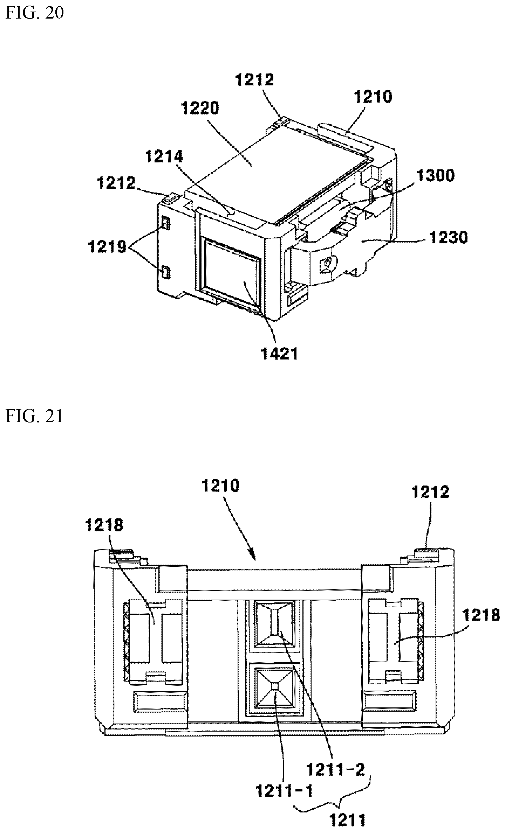

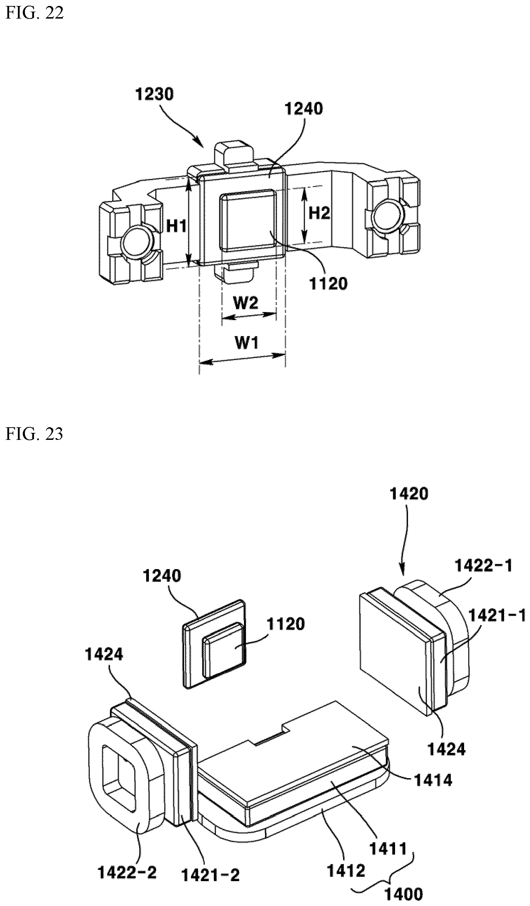

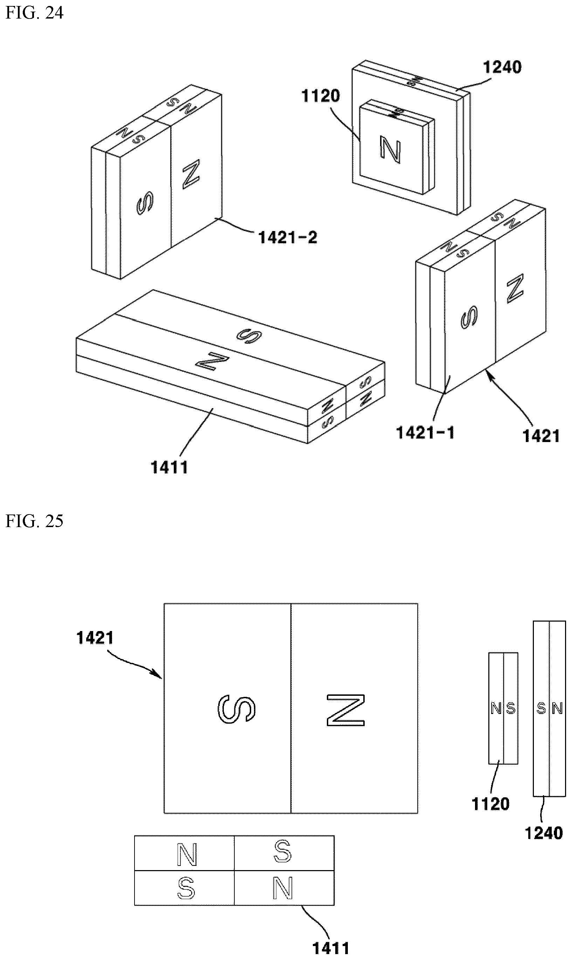

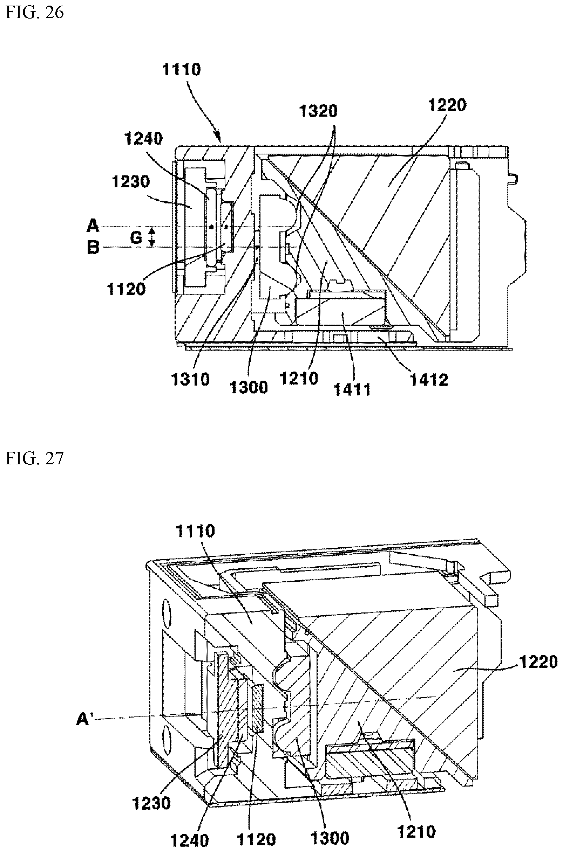

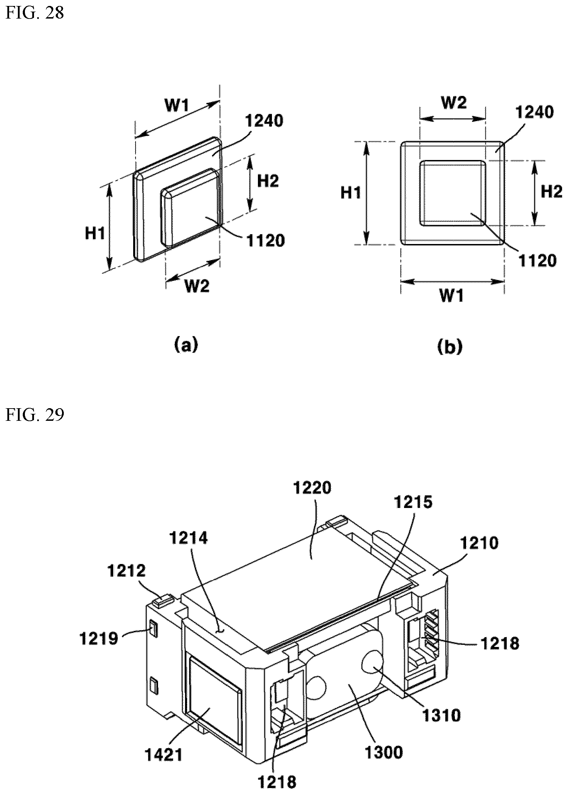

FIG. 9 is a perspective view of a reflective member driving device according to the present embodiment; FIG. 10 is an exploded perspective view of a reflective member driving device according to the present embodiment; FIG. 11 is a bottom exploded perspective view of a reflective member driving device according to the present embodiment; FIGS. 12 and 13 are diagrams for explaining a structure related to a moving plate of a reflective member driving device according to the present embodiment; FIG. 14 is a perspective view of a state in which the configuration of a moving part of a reflective member driving device according to the present embodiment is omitted; FIG. 15 is a perspective view of the reflective member driving device of FIG. 14 in a state in which components such as a substrate are omitted; FIG. 16 is a perspective view illustrating a fixed part and related configuration of a reflective member driving device according to the present embodiment; FIG. 17 is a perspective view illustrating a state in which a moving part is disposed in a fixed part in a reflective member driving device according to the present embodiment; FIG. 18 is an exploded perspective view illustrating the related shapes of a rigid mover and the fixed part of a reflective member driving device according to the present embodiment; FIG. 19 is a perspective view illustrating an disposement state of a second magnet of a fixed part of a reflective member driving device according to the present embodiment; FIG. 20 is a perspective view illustrating a coupling state between a holder of a reflective member driving device and a rigid mover according to the present embodiment; FIG. 21 is a front view illustrating a holder of a reflective member driving device according to the present embodiment; FIG. 22 is a perspective view illustrating a rigid mover, a first magnet, and a second magnet of a reflective member driving device according to the present embodiment; FIG. 23 is a perspective view illustrating a first magnet, a second magnet, and a driving unit of a reflective member driving device according to the present embodiment; FIG. 24 is a perspective view illustrating a first magnet, a second magnet, and a driving magnet of a reflective member driving device according to the present embodiment; FIG. 25 is a side view illustrating a first magnet, a second magnet, and a driving magnet of a reflective member driving device according to the present embodiment; FIG. 26 is a cross-sectional view of a reflective member driving device according to the present embodiment; FIG. 27 is a cross-sectional perspective view of a reflective member driving device according to a modified example; FIG. 28 (a) is a perspective view, and (b) is a rear side view illustrating a first magnet and a second magnet of a reflective member driving device according to the present embodiment; and FIG. 29 is a perspective view illustrating a state in which a moving plate is disposed in a moving part of a reflective member driving device according to the present embodiment.

A reflective member driving device **1000** may perform optical image stabilization (OIS) function. The reflective member driving device **1000** may perform a handshake correction function. The reflective member driving device **1000** may move the reflective member **1220.** The reflective member driving device **1000** may tilt the reflective member **1220.** The reflective member driving device **1000** may tilt the reflective member **1220** around two axes. The reflective member driving device **1000** may tilt the reflective member **1220** about the x-axis and the y-axis. The x-axis and the y-axis may be perpendicular to each other.

The reflective member driving device **1000** may be a reflective member actuator. The reflective member driving device **1000** may be an OIS actuator. The reflective member driving device **1000** may be an OIS driving device. The reflective member driving device **1000** may be a prism driving device. The reflective member driving device **1000** may be an actuator. The reflective member driving device **1000** may be an actuator device. The reflective member driving device **1000** may be an actuator driving device. The reflective member driving device **1000** may be a tilting device.

The reflective member driving device **1000** may comprise a fixed part **1100.** The fixed part **1100** may be a relatively fixed part when the moving part **1200** is moved. The fixed part **1100** may accommodate at least a portion of the moving part **1200.** The fixed part **1100** may be disposed outside the moving part **1200.**

The reflective member driving device **1000** may comprise a housing **1110.** The fixed part **110** may comprise a housing **1110.** The housing **1110** may be disposed outside the holder **1210.** The housing **1110** may accommodate at least a portion of the holder **1210.** The housing **1110** may comprise an opening or a hole in the upper plate and any one of the side plates for securing a path of light. The housing **1110** may comprise an upper plate, a lower plate, and a plurality of side plates.

The housing **1110** may comprise a first portion **1111.** The first portion **1111** may be formed on a side plate of the housing **1110.** A moving plate **1300** may be disposed on the first portion **1111.** The first portion **1111** may be disposed between the holder **1210** and a rigid mover **1230.** The first portion **1111** may be disposed between the rigid mover **1230** and the moving plate **1300.** A second magnet **1120** may be disposed on the first portion **1111.** The moving plate **1300** may be disposed on one side of the first portion **1111** and the second magnet **1120** may be disposed on the other side of the opposite side. A portion of the housing **1110** may be disposed between the moving plate **1300** and the rigid mover **1230.**

The housing **1110** may comprise a second portion **1112.** The second portion **1112** may be disposed on the holder **1210.** The second portion **1112** may be in contact with the holder **1210** when the holder **1210** moves upward. The second portion **1112** may be overlapped with the holder **1210** in the moving direction of the holder **1210.** The second portion **1112** may be an upper plate of the housing **1110.**

The housing **1110** may comprise a third portion **1113.** The third portion **1113** may be disposed below the holder **1210.** The third portion **1113** may be in contact with the holder **1210** when the holder **1210** moves downward. The third portion **1113** may be overlapped with the holder **1210** in the moving direction. The third portion **1113** may be a lower plate of the housing **1110.**

The housing **1110** may comprise a hole **1114.** The hole **1114** may be a rigid mover through hole. The hole **1114** may be formed in the side plate of the housing **1110.** The hole **1114** may be formed in the first portion **1111** of the housing **1110.** A rigid mover **1230** may be disposed in the hole **1114.** The rigid mover **1230** may be disposed to pass through the hole **1114.** The hole **1114** may be formed to be larger than the movement space of the rigid mover **1230** so as not to interfere with the rigid mover **1230.** The housing **1110** may comprise two holes **1114** into which the rigid mover **1230** is inserted.

The housing **1110** may comprise a groove **1115.** The groove **1115** may be an accommodating groove of a first protrusion of the moving plate. A first protrusion **1310** of the moving plate **1300** may be disposed in the groove **1115.** The groove **1115** may accommodate at least a portion of the moving plate **1300.** The groove **1115** may arrest the movement except for rotation of the first protrusion **1310** of the moving plate **1300.** The groove **1115** may comprise an inclined surface being in contact with the first protrusion **1310** of the moving plate **1300.** An inclined surface may comprise a plurality of inclined surfaces.

The housing **1110** may comprise a plurality of grooves **1115** in which a plurality of first protrusions **1310** are disposed. The plurality of grooves **1115** of the housing **1110** may comprise: a first groove **1115-1** in contact with a first protrusion **1310** among a plurality of first protrusions **1310** at four point; and a second groove **1115-2** in contact with the first protrusion **1310** of the other one among the plurality of first protrusions **1310** at two points.

The groove **1115** may comprise a first groove **1115-1.** The first groove **1115-1** may be a four-point contact groove. The first groove **1115-1** may be in contact with one among the two first protrusions **1310** of the moving plate **1300** at four points. Through this, the first groove **1115-1** of the housing **1110** may arrest the movement in four directions, up, down, left, and right except for rotation of one among the first protrusions **1310** of the moving plate **1300.**

The groove **1115** may comprise a second groove **1115-2.** The second groove **1115-2** may be a two-point contact groove. The second groove **1115-2** may be in contact with the other one among the two first protrusions **1310** of the moving plate **1300** at two points. Through this, the second groove **1115-2** of the housing **1110** may arrest the movement of the other one among the first protrusions **1310** of the moving plate **1300** in two directions. For example, the second groove **1115-2** of the housing **1110** may arrest the up and down movement of the first protrusion **1310** of the moving plate **1300** and may not arrest the left to right movement.

The housing **1110** may comprise a protruded portion **1116.** The protruded portion **1116** may be coupled to the lens driving device **2000.** The protruded portion **1116** may be formed on a side plate of the housing **1110.** The protruded portion **1116** may be formed on a side of the housing **1110** facing the lens driving device **2000.** The protruded portion **1116** may have a trapezoidal cross-section. The protruded portion **1116** may be coupled to the housing **2110** of the lens driving device **2000.** The protruded portion **1116** may be inserted into the first groove **2111** of the housing **2110** of the lens driving device **2000.** The protruded portion **1116** may be coupled to the housing **2110** of the lens driving device **2000** by an adhesive.

The housing **1110** may comprise a protrusion **1117.** The protrusion **1117** may be coupled to the lens driving device **2000.** The protrusion **1117** may be formed on the side plate of the housing **1110.** The protrusion **1117** may be formed on a side of the housing **1110** facing the lens driving device **2000.** The protrusion **1117** may comprise a circular cross-section. The protrusion **1117** may be coupled to the housing **2110** of the lens driving device **2000.** The protrusion **1117** may be inserted into the second groove **2112** of the housing **2110** of the lens driving device **2000.** The protrusion **1117** may be coupled to the housing **2110** of the lens driving device **2000** by an adhesive.

The housing **1110** may comprise a protrusion **1118.** The protrusion **1118** may be a protrusion to be in contact with the rigid mover. A protrusion **1118** may be formed on a second surface of the housing **1110.** The protrusion **1118** may be in contact with the rigid mover **1230.** The protrusion **1118** may be formed on an inner circumferential surface of the hole **1114** of the housing **1110** through which the rigid mover **1230** passes. The protrusion **1118** may be formed to be in contact with any one or more of the lower surface and the upper surface of the rigid mover **1230** when the rigid mover **1230** is moved. The protrusion **1118** can prevent the rigid mover **1230** from being separated and removed from the original position excessively.

The protrusion **1118** may comprise a plurality of protrusions. The protrusion **1118** may comprise two protrusions. The two protrusions may be spaced apart by the same distance as the second groove disposed below among the grooves **1119** of the housing **1110.** When the body portion of the rigid mover **1230** moves downward, the body portion of the rigid mover **1230** may be in contact with the two protrusions **1118** of the housing **1110.**

The housing **1110** may comprise a groove **1119.** At least a portion of the protruded portion **1231** may be disposed in the groove **1119.** A portion of the protruded portion **1231** may be disposed in the groove **1119.** The groove **1119** may be open toward the outside of the housing **1110.** The groove **1119** may be larger than the protruded portion **1231** of the rigid mover **1230.** The groove **1119** may be spaced apart from the protruded portion **1231** of the rigid mover **1230.** In an initial state in which power is not applied to the driving unit **1400,** the groove **1119** may be spaced apart from the protruded portion **1231** of the rigid mover **1230.** Even when power is applied to the driving unit **1400** to be driven, the groove **1119** may be spaced apart from the protruded portion **1231** of the rigid mover **1230.** The groove **1119** of the housing **1110** and the protruded portion **1231** of the rigid mover **1230** may be in contact with each other by an external impact. That is, the groove **1119** of the housing **1110** and the protruded portion **1231** of the rigid mover **1230** do not come into contact within the normal driving range of the rigid mover **1230,** and they can be in contact with each other when they are outside the normal driving range due to an impact. The groove **1119** of the housing **1110** and the protruded portion **1231** of the rigid mover **1230** may perform a stopper function upon impact.

The groove **1119** may comprise a first groove portion and a second groove portion recessed from the first groove portion. The groove **1119** may be formed as a two-step groove. The groove **1119** may have a double groove shape. A damper **1500** may be disposed in the second groove portion. A contact area between the damper **1500** and the housing **1110** may be increased by the second groove portion. The second groove portion may prevent the damper **1500** from flowing.

The groove **1119** may comprise a plurality of grooves. The groove **1119** may comprise a first groove in which at least a portion of the first protruded region of the rigid mover **1230** is disposed, and a second groove in which at least a portion of the second protruded region is disposed. The housing **1110** may comprise a first surface opposite to the upper surface of the body portion of the rigid mover **1230.** The housing **1110** may comprise a second surface facing the lower surface of the body portion of the rigid mover **1230.** The housing **1110** may comprise a first groove formed on the first surface of the housing **1110** and a second groove formed on the second surface of the housing **1110.**

The reflective member driving device **1000** may comprise a second magnet **1120.** The fixed part **1100** may comprise a second magnet **1120.** The second magnet **1120** may be disposed in the fixed part **1100.** The second magnet **1120** may be a second repulsive force magnet. The second magnet **1120** may be disposed in the housing **1110.** The second magnet **1120** may be disposed on the first portion **1111** of the housing **1110.** The second magnet **1120** may be disposed on the opposite side of the moving plate **1300** with respect to the first portion **1111** of the housing **1110.** The second magnet **1120** may be disposed between the first magnet **1240** and the moving plate **1300.** The second magnet **1120** may be disposed to face the first magnet **1240.** The second magnet **1120** may generate a repulsive force with the first magnet **1240.** The second magnet **1120** may be disposed to generate a repulsive force with the first magnet **1240.** The second magnet **1120** may be disposed to face the same polarity as the first magnet **1240.** The second magnet **1120** may push the first magnet **1240** out.

At least a portion of the second magnet **1120** may be disposed between the first magnet **1240** and the moving plate **1300.** The second magnet **1120** may be disposed between the first magnet **1240** and the moving plate **1300.** The center of the second magnet **1120** may be disposed at the same height as the center of the first magnet **1240.**

In the present embodiment, the driving unit **1400** may tilt the moving part **1200** With respect to the x-axis and the y-axis of the moving plate **1300** perpendicular to each other. At this time, in the y-axis direction, a horizontal axis passing through the center of the second magnet **1120** may be disposed to be eccentric with the x-axis of the moving plate **1300.** The horizontal axis may be parallel to the x-axis.

In a direction passing through the x-axis, the center of the second magnet **1120** may not be eccentric with the y-axis. When viewed from the moving plate **1300** toward the first magnet **1240,** the center of the second magnet **1120** may be disposed to coincide with the y-axis. The center of the second magnet **1120** may be disposed at the same height as the center of the first magnet **1240.** The center of the second magnet **1120** may be disposed at the same height as the center of the first magnet **1240.** The center of gravity of the second magnet **1120** may be disposed at the same height as the center of gravity of the first magnet **1240.**

The second magnet **1120** may comprise a second surface disposed opposite to the first surface of the second magnet **1120.** The first magnet **1240** may comprise a first surface facing the second surface of the second magnet **1120.** The first surface of the first magnet **1240** may have the same polarity as the second surface of the second magnet **1120.**

In a direction in which the first surface of the first driving magnet **1411** faces, the second magnet **1120** may be disposed so as not to be overlapped the first driving magnet **1411.** In a direction in which the first surface of the second magnet **1120** faces, the second magnet **1120** may be disposed so as not to be overlapped with the first driving magnet **1411.**

The reflective member driving device **1000** may comprise a substrate **1130.** The fixed part **1100** may comprise a substrate **1130.** The substrate **1130** may be a flexible printed circuit board (FPCB). The substrate 1130 may be a flexible printed circuit board. The substrate **1130** may be disposed in the housing **1110.**

The reflective member driving device **1000** may comprise a suspension (SUS) **1140.** The fixed part **1100** may comprise a SUS **1140.** The suspension **1140** may be disposed on the substrate **1130.** The suspension **1140** may be disposed on the outer surface of the substrate **1130.** The suspension **1140** may reinforce the strength of the substrate **1130.**

The reflective member driving device **1000** may comprise a gyro sensor **1150.** The fixed part **1100** may comprise a gyro sensor **1150.** The gyro sensor **1150** may detect shaking of the camera device **10.** The shake detected by the gyro sensor **1150** may be offset through the hand shake correction function. The gyro sensor **1150** may be disposed on the substrate **1130.** The gyro sensor **1150** may be disposed on an outer surface of the substrate **1130.**

The reflective member driving device **1000** may comprise a plate **1160.** The fixed part **1100** may comprise a plate **1160.** The plate **1160** may be coupled to the housing **1110.** The plate **1600** may cover up the rigid mover **1230.** The plate **1600** may cover the rigid mover **1230.** The plate **1160** may be disposed to cover the open portion of the housing **1110.** The plate **1160** may be disposed to close the open front of the housing **1110.** The plate **1160** may be formed of a metal plate. The housing **1110** may comprise a groove in which an adhesive for fixing the plate **1160** to the housing **1110** is disposed.

The reflective member driving device **1000** may comprise a driver IC **1170.** The fixed part **1100** may comprise a driver IC **1170.** The driver IC **1170** may be disposed on the substrate **1130.** The driver IC **1170** may be electrically connected to the first coil **1412** and the second coil **1422.** The driver IC **1170** may supply current to the first coil **1412** and the second coil **1422.** The driver IC **1170** may control at least one of a voltage and a current applied to each of the first coil **1412** and the second coil **1422.** The driver IC **1170** may be electrically connected to the Hall sensors **1413** and **1423.** The driver IC **1170** may feedback-control the voltage and current applied to the first coil **1412** and the second coil **1422** through the position of the reflective member **1220** detected by the Hall sensors **1413** and **1423.**

The reflective member driving device **1000** may comprise a moving part **1200.** The moving part **1200** may be a moving part. The moving part **1200** may be a movable part. The moving part **1200** may be a mover. The moving part **1200** may move with respect to the fixed part **1100.** The moving part **1200** may be tilted with respect to the fixed part **1100.** The moving part **1200** may be disposed inside the fixed part **1100.** At least a portion of the moving part **1200** may be spaced apart from the fixed part **1100.**

In the present embodiment, in an initial state in which no current is applied to the driving unit **1400,** the moving part **1200** may be in contact with the fixed part **1100.**

The reflective member driving device **1000** may comprise a holder **1210.** The moving part **1200** may comprise a holder **1210.** The holder **1210** may be disposed in the housing **1110.** The holder **1210** is movable with respect to the housing **1110.** The holder **1210** may be tilted with respect to the housing **1110.** At least a portion of the holder **1210** may be spaced apart from the housing **1110.** The holder **1210** may be in contact with the housing **1110.**

In the present embodiment, the holder **1210** may move between the second portion **1112** and the third portion **1113** of the housing **1110** by a first driving unit **1410.** In an initial state in which no current is applied to the first driving unit **1410,** the holder **1210** may be in contact with the housing **1110.** In the initial state, the holder **1210** may be in contact with the inner surface of the housing **1110** adjacent to the incident surface of the reflective member **1220.** As current is applied to the driving unit **1400,** the holder **1210** may be spaced apart from the inner surface of the housing **1110** and may be tilted with respect to the first axis of the moving plate **1300.**

The holder **1210** may comprise a groove **1211.** The groove **1211** may be an accommodating groove of a second protrusion of the moving plate. A second protrusion **1320** of the moving plate **1300** may be disposed in the groove **1211.** The groove **1211** may accommodate at least a portion of the moving plate **1300.** The groove **1211** may arrest the movement except for rotation of the second protrusion **1320** of the moving plate **1300.** The groove **1211** may comprise an inclined surface being in contact with the second protrusion **1320** of the moving plate **1300.** An inclined surface may comprise a plurality of inclined surfaces.

The holder **1210** may comprise a plurality of grooves **1211** in which a plurality of second protrusions **1320** are being disposed. The plurality of grooves **1211** of the holder **1210** comprises a first groove **1211-1** in four-point contact with one of the second protrusions **1320** among the plurality of second protrusions **1320,** and a plurality of second protrusions **1320.** It may comprise a second groove **1211-2** in two-point contact with the other second protrusion **1320.**

The groove **1211** may comprise a first groove **1211-1.** The first groove **1211-1** may be a four-point contact groove. The first groove **1211-1** may be in contact with one among the two second protrusions **1320** of the moving plate **1300** at four points. Through this, the first groove **1211-1** of the holder **1210** may arrest the movement in four directions, up, down, left, and right except for rotation of one among the second protrusions **1320** of the moving plate **1300.**

The groove **1211** may comprise a second groove **1211-2.** The second groove **1211-2** may be a two-point contact groove. The second groove **1211-2** may be in contact with the other one among the two second protrusions **1320** of the moving plate **1300** at two points. Through this, the second groove **1211-2** of the holder **1210** may arrest the movement of the other one among the second protrusions **1320** of the moving plate **1300** in two directions. For example, the second groove **1211-2** of the holder **1210** may arrest the movement in the left and right directions of the second protrusion **1320** of the moving plate **1300** and may not arrest the movement in the up and down direction.

The holder **1210** may comprise a first protrusion **1212.** The first protrusion **1212** may be an upper stopper. The first protrusion **1212** may be formed on an upper surface of the holder **1210.** The first protrusion **1212** may be protruded from an upper surface of the holder **1210.** The first protrusion **1212** may be in contact with the housing **1110** when the holder **1210** moves upward. The first protrusion **1212** may be in contact with the second portion **1112** of the housing **1110** when the holder **1210** moves upward.

The holder **1210** may comprise a second protrusion **1213.** The second protrusion **1213** may be a lower stopper. The second protrusion **1213** may be formed on a lower surface of the holder **1210.** The second protrusion **1213** may be protruded from a lower surface of the holder **1210.** The second protrusion **1213** may be in contact with the housing **1110** when the holder **1210** moves downward. The second protrusion **1213** may be in contact with the third portion **1113** of the housing **1110** when the holder **1210** moves downward.

In the present embodiment, in the initial state, the first protrusion **1212** of the holder **1210** may be in contact with the second portion **1112** of the housing **1110.** The second protrusion **1213** of the holder **1210** may come into contact with the third portion **1113** of the housing **1110** by applying a current to the first driving unit **1410** or by impact.

The holder **1210** may comprise an adhesive accommodating groove **1214.** The adhesive accommodating groove **1214** may receive an adhesive for fixing the reflective member **1220** to the holder **1210.** The adhesive accommodating groove **1214** may be formed on a surface in contact with the reflective member **1220.** An adhesive may be disposed in the adhesive accommodating groove **1214.**

The holder **1210** may comprise a groove **1215.** The groove **1215** may be a separation groove providing a separation space between the groove **1215** and the reflective member **1220.** The groove **1215** may be formed on a surface in contact with the reflective member **1220.** A contact area between the reflective member **1220** and the holder **1210** may be reduced by the groove **1215.**

The holder **1210** may comprise a groove **1216.** The groove **1216** may be a slimming groove. The groove **1216** may be formed in a central portion of the holder **1210.** The weight of the holder **1210** may be reduced by the groove **1216.**

The holder **1210** may comprise a magnet accommodating groove **1217.** Driving magnets **1411** and **1421** may be disposed in the magnet accommodating groove **1217.** The magnet accommodating groove **1217** may be formed in a shape corresponding to the driving magnets **1411** and **1421.** The magnet accommodating groove **1217** may be concavely formed on a lower surface of the holder **1210.** The magnet accommodating groove **1217** may be formed on a lower surface and both side surfaces of the holder **1210.** The magnet accommodating groove **1217** may comprise a plurality of magnet accommodating grooves. The magnet accommodating groove **1217** may comprise a first magnet accommodating groove accommodating the first driving magnet **1411** and the yoke **1414.** The magnet accommodating groove **1217** may comprise a second magnet accommodating groove accommodating the second driving magnet **1421** and the yoke **1424.**

The holder **1210** may comprise a groove **1218.** The groove **1218** may be a rigid mover accommodating groove. A coupling portion **1232** of the rigid mover **1230** may be disposed in the groove **1218.** The groove **1218** may be formed in a shape corresponding to the coupling portion **1232** of the rigid mover **1230.** The groove **1218** may comprise a groove in which an adhesive for fixing the coupling portion **1232** of the rigid mover **1230** to the holder **1210** is accommodated. The holder **1210** may comprise a plurality of protrusions formed inside the groove **1218.** At least a portion of the coupling portion **1232** of the rigid mover **1230** may be inserted into the groove **1218.** The reflective member driving device **1000** may comprise an adhesive for fixing the rigid mover **1230** to the holder **1210.** At least a portion of the adhesive may be disposed between the pluralities of protrusions formed inside the grooves **1218** of the holder **1210.** Through this, the coupling force between the rigid mover **1230** and the holder **1210** may be enhanced.

The holder 1210 may comprise a side stopper **1219.** The side stopper **1219** may be formed on both sides of the holder **1210.** The side stopper **1219** may be protruded from the side surface of the holder **1210.** The side stopper **1219** may be in contact with the housing **1110** when the holder **1210** moves laterally. The side stopper **1219** may be in contact with the side plate of the housing **1110** when the holder **1210** moves laterally.

The reflective member driving device **1000** may comprise a reflective member **1220.** The moving part **1200** may comprise a reflective member **1220.** The reflective member **1220** may be disposed on the holder **1210.** The reflective member **1220** may be disposed inside the holder **1210.** The reflective member **1220** may be coupled to the holder **1210.** The reflective member **1220** may be fixed to the holder **1210.** The reflective member **1220** may be fixed to the holder **1210** by an adhesive. The reflective member **1220** may move integrally with the holder **1210.** The reflective member **1220** may change the path of light. The reflective member **1220** may reflect light. The reflective member **1220** may comprise a prism. The reflective member **1220** may comprise a mirror. The reflective member **1220** may be formed in a triangular prism shape. An angle between a path of light incident to the reflective member **1220** and a path of exiting light may be 90 degrees.

The reflective member driving device **1000** may comprise a rigid mover **1230.** The moving part **1200** may comprise a rigid mover **1230.** The rigid mover **1230** may be coupled to the holder **1210.** The rigid mover **1230** may be formed as a member separate from the holder **1210.** The rigid mover **1230** may be coupled to the holder **1210** through the hole **1114** of the housing **1110.** The rigid mover **1230** may be formed of a nonmagnetic metal. A first magnet **1240** and a second magnet **1120** may be disposed between the rigid mover **1230** and the holder **1210.** The first magnet **1240** and the second magnet **1120** may be disposed to face the same polarity and may repel each other. The first magnet **1240** fixed to the housing **1110** may push the second magnet **1120** outward. The rigid mover **1230** to which the second magnet **1120** is fixed by the repulsive force of the first magnet **1240** may also be pressed toward the outer side. The holder **1210** to which the rigid mover **1230** is fixed may also be pressed toward the outer side. Through this, the holder **1210** may press the moving plate **1300** against the housing **1110.** Through this, the moving plate **1300** may be disposed between the holder **1210** and the housing **1110** without being separated and removed.

The rigid mover **1230** may comprise a protruded portion **1231.** The protruded portion **1231** may be extended from the body portion of the rigid mover **1230.** The protruded portion **1231** may be coupled to the housing **1110** by the damper **1500.** The protruded portion **1231** may be disposed in a central region of the rigid mover **1230.** The protruded portion **1231** may be formed in a central region of the rigid mover **1230.** The protruded portion **1231** may be protruded from an upper surface of the body portion of the rigid mover **1230.** The protruded portion **1231** may in contact with the housing **1110** when the rigid mover **1230** moves.

The protruded portion **1231** may comprise a plurality of protruded portions. The protruded portion **1231** of the rigid mover **1230** may comprise a first protruded portion formed on an upper surface of the body portion of the rigid mover **1230.** It may comprise a second protruded portion formed on a lower surface of the body portion of the rigid mover **1230.** At least a portion of the first protruded portion of the rigid mover **1230** may be disposed in the first groove of the housing **1110.** At least a portion of the second protruded portion of the rigid mover **1230** may be disposed in the second groove of the housing **1110.** The protruded portion **1231** may comprise a first protruded region being protruded to one side and a second protruded region being protruded to the other side. Each of the first and second protruded regions may be referred to as a protruded portion.

The rigid mover **1230** may comprise a body portion. The body portion may be disposed at an opposite side of the moving plate **1300** with respect to the first portion **1111** of the housing **1110.** The rigid mover **1230** may comprise two coupling portions **1232** protruding from both sides of the body portion. The rigid mover **1230** may comprise two protruded portions **1231** being protruded up and down directions from the body portion.

The rigid mover **1230** may comprise a coupling portion **1232.** The coupling portion **1232** may be a leg portion. The coupling portion **1232** may be extended from the body portion of the rigid mover **1230.** The coupling portion **1232** may pass through the hole **1114** of the housing **1110.** The coupling portion **1232** may be coupled to the holder **1210.** The coupling portion **1232** may be fixed to the holder **1210** by an adhesive. At least a portion of the coupling portion **1232** may be inserted into the groove **1218** of the holder **1210.**

The reflective member driving device **1000** may comprise a first magnet **1240.** The moving part **1200** may comprise a first magnet **1240.** The first magnet **1240** may be disposed in the moving part **1200.** The first magnet **1240** may be a first repulsive force magnet. The first magnet **1240** may be disposed on the rigid mover **1230.** The first magnet **1240** may be disposed in the body portion of the rigid mover **1230.** The first magnet **1240** may be disposed to face the second magnet **1120.** The first magnet **1240** may be disposed to generate a repulsive force with the second magnet **1120.** The first magnet **1240** may be disposed to face the same polarity as the second magnet **1120.** The first magnet **1240** may push the second magnet **1120.**

In the present embodiment, with respect to the first optical axis, the central axis of the first magnet **1240** may be disposed to be eccentric with the central axis of the moving plate **1300.** At this time, the first optical axis may be a z-axis. The first optical axis may be an axis perpendicular to the sensor surface of the image sensor **3400.** The first optical axis may be an optical axis of lens groups disposed adjacent to the image sensor **3400.**

As illustrated in FIG. 26, the horizontal central axis **A** of the first magnet **1240** and the second magnet **1120** may be eccentrically placed to have a gap **G** in the longitudinal direction with the horizontal central axis **B** of the moving plate **1300.**

When viewed from the moving plate **1300** toward the first magnet **1240,** the center of the first magnet **1240** may be disposed to be eccentric with the center of the moving plate **1300.**

With respect to the facing surface, the horizontal axis passing through the central axis of the first magnet **1240** may be eccentric in the direction of the horizontal axis passing through the central axis of the moving plate **1300** and a second optical axis perpendicular to the first optical axis. At this time, the horizontal axis may be an x-axis. The horizontal axis may be disposed in a horizontal direction. The second optical axis may be a y-axis. The second optical axis may be an axis parallel to the sensor surface of the image sensor **3400.** The second optical axis may be disposed in a vertical direction. With respect to the facing surface, the horizontal axis that meets or comes into contact with the central axis of the first magnet **1240** may be eccentric in the direction of the horizontal axis passing through the central axis of the moving plate **1300** and the second optical axis perpendicular to the first optical axis. The center of the first magnet **1240** may be disposed to be eccentric in the longitudinal direction with respect to the center of the moving plate **1300.**

With respect to the facing surface, the vertical axis passing through the central axis of the first magnet **1240** may not be eccentric in the direction of the vertical axis and the horizontal axis passing through the central axis of the moving plate **1300.** At this time, the horizontal axis may be an x-axis. The horizontal axis may be disposed in a horizontal direction. The second optical axis may be a y-axis. The second optical axis may be an axis parallel to the sensor surface of the image sensor **3400.** The second optical axis may be disposed in a vertical direction. The center of the first magnet **1240** may be disposed so as not to be eccentric in the horizontal direction with respect to the center of the moving plate **1300.**

With respect to the facing surface, a horizontal line passing through the center of the first magnet **1240** may be eccentric in the vertical direction from a horizontal line passing through the center of the moving plate **1300.** With respect to the facing surface, the vertical line passing through the center of the first magnet **1240** may not be eccentric in the horizontal direction from the vertical line passing through the center of the moving plate **1300.**

A horizontal axis of the first magnet **1240** may be disposed higher than a horizontal axis of the moving plate **1300.** As a modified embodiment, the horizontal axis of the first magnet **1240** may be disposed lower than the horizontal axis of the moving plate **1300.**

The first magnet **1240** and the second magnet **1120** may be disposed between the rigid mover **1230** and the moving plate **1300.**

The size of the first magnet **1240** may be different from the size of the second magnet **1120.** The first magnet **1240** may be formed in a size different from that of the second magnet **1120.** The size of the first magnet **1240** may be larger than the size of the second magnet **1120.** The first magnet **1240** may be formed to be larger than the second magnet **1120.**

The area of the first surface of the first magnet **1240** may be larger than the area of the second surface of the second magnet **1120** facing the first surface. The first surface and the second surface are arbitrarily referred to as one of the two surfaces, and the other may be referred to as the second surface, and both may be referred to as the first surface. The first magnet **1240** may comprise a first surface. The second magnet **1120** may comprise a first surface facing the first surface of the first magnet **1240.** The area of the first surface of the first magnet **1240** may be larger than the area of the first surface of the second magnet **1120.**

The first surface of the first magnet **1240** may comprise a first side. The first surface of the second magnet **1120** may comprise a first side disposed in a direction corresponding to the first side of the first magnet **1240.** The first side of the second magnet **1120** may be 55% to 75% of the first side of the first magnet **1240.** The first side of the second magnet **1120** may be 60% to 66% of the first side of the first magnet **1240.** The first side of the second magnet **1120** may be 62% to 64% of the first side of the first magnet **1240.** The height **H1** of the first magnet **1240** may be greater than the height **H2** of the second magnet **1120.** The width **W1** of the first magnet **1240** may be greater than the width **W2** of the second magnet **1120.**

The area of the first surface of the second magnet **1120** may be 30% to 50% of the area of the first surface of the first magnet **1240.** The area of the first surface of the second magnet **1120** may be 35% to 45% of the area of the first surface of the first magnet **1240.** The area of the first surface of the second magnet **1120** may be 38% to 42% of the area of the first surface of the first magnet **1240.**

The first magnet **1240** and the second magnet **1120** may be formed to have the same thickness. The volume of the second magnet **1120** may be 30% to 50% of the volume of the first magnet **1240.**

When viewed from the second magnet **1120** toward the first magnet **1240,** an edge region of the second magnet **1120** may be disposed inside the first surface of the first magnet **1240.** The edge region may be a corner region. The edge region may be a corner. The first magnet **1240** may be disposed such that all regions of the second magnet **1120** are being overlapped with the first magnet **1240** in a first direction in which the first magnet **1240** faces the second magnet **1120.** The first magnet **1240** may be disposed such that all regions of the second magnet **1120** are being overlapped with the first magnet **1240** in a first direction in which the first magnet **1240** faces the second magnet **1120.**

As a modified embodiment, the size of the first magnet **1240** may be smaller than the size of the second magnet **1120.** The second magnet **1120** may be formed to be larger than the first magnet **1240.**

The central axes of the first magnet **1240** and the second magnet **1120** may coincide. However, in actual products, a tolerance of ±1% to ±2% may occur.

In the present embodiment, the second magnet **1120** may comprise a second surface facing the first surface of the first magnet **1240.** At this time, the central axis of the first magnet **1240** may be disposed to be eccentric with the central axis of the moving plate **1300** in a direction perpendicular to the first surface. The area of the first surface of the first magnet **1240** may be larger than the area of the second surface of the second magnet **1120.**

In the present embodiment, in an initial state in which no current is applied to the driving unit **1400,** the moving part **1200** may be in contact with the fixed part **1100.** When viewed from the second magnet **1120** toward the first magnet **1240,** an edge of the first magnet **1240** may surround the second magnet **1120.** When viewed from the second magnet **1120** toward the first magnet **1240,** the second magnet **1120** may be disposed at an inner side of the corner of the first magnet **1240.**

The first magnet **1240** may comprise a first surface facing the second magnet **1120** and a second surface opposite to the first surface. The first surface of the first magnet **1240** may comprise a first side and a second side shorter than the first side. The first side of the first magnet **1240** may be formed to be 1 mm to 5 mm. The second side of the first magnet **1240** may be formed to be 0.8 mm to 4 mm. A thickness between the first and second surfaces of the first magnet **1240** may be formed to be 0.1 mm to 0.5 mm.

In the present embodiment, the force Fx formed by the first driving unit **1410** may be within 7 mN. In addition, the force Fy formed by the second driving unit **1420** may be within 7 mN. Or, the force Fx formed by the first driving unit **1410** may be within 3 mN. In addition, the force Fy formed by the second driving unit **1420** may be within 3 mN.

The first surface of the first magnet **1240** may be formed in a square shape. The first surface of the second magnet **1120** may be formed in a square shape. Or, each of the first surface of the first magnet **1240** and the first surface of the second magnet **1120** may be formed in a rectangular shape. The first magnet **1240** may have a square cross-section at least in part. The second magnet **1120** may have a square cross-section at least in part. The first magnet **1240** may be formed to have a rounded edge. The second magnet **1120** may be formed to have a rounded edge.

As a modified embodiment, the first magnet **1240** may have a circular cross section. The first magnet **1240** may be formed in a cylindrical shape. The second magnet **1120** may have a circular cross-section. The second magnet **1120** may be formed in a cylindrical shape. The first magnet **1240** may be formed to have a rounded edge. The first magnet **1240** may be formed to have a curved edge. The first magnet **1240** may be formed so that an edge has a curvature. The first magnet **1240** may be formed to have a C-cut or R-cut edge. The second magnet **1120** may be formed to have a rounded edge. The second magnet **1120** may be formed to have a curved edge. The second magnet **1120** may be formed so that an edge has a curvature. The second magnet **1120** may be formed to have a C-cut or R-cut edge.

The reflective member driving device **1000** may comprise a moving plate **1300.** The moving plate **1300** may be an intermediate plate. The moving plate **1300** may be disposed between the housing **1110** and the holder **1210.** The moving plate **1300** may be disposed between the rigid mover **1230** and the holder **1210.** The moving plate **1300** may be disposed between the first magnet **1240** and the holder **1210.** The moving plate **1300** may be placed between the fixed part **1100** and the moving part **1200.** The moving plate **1300** may be disposed between the first surface of the second magnet **1120** and the holder **1210.** The moving plate **1300** may guide the movement of the holder **1210** against the housing **1110.** The moving plate **1300** may provide a tilt center of the holder **1210.** That is, the holder **1210** may be tilted around the moving plate **1300.** The moving plate **1300** may have one side disposed on the holder **1210** and the other side disposed in the housing **1110.** The moving plate **1300** may be in contact with the holder **1210** and the housing **1110.**

The moving plate **1300** may comprise a first surface facing the housing **1110** and a second surface facing the holder **1210.** The first surface of the moving plate **1300** may comprise a plurality of first protrusions **1310** spaced apart from each other in the direction of the first axis. The second surface of the moving plate **1300** may comprise a plurality of second protrusions **1320** spaced apart from each other in the direction of the second axis.

The moving plate **1300** may comprise a plurality of first convex portions formed on one surface and a plurality of second convex portions formed on the other surface. The first convex portion may be a first protrusion **1310.** The second convex portion may be a second protrusion **1320.** The x-axis may correspond to a straight line connecting two convex portions among the plurality of first convex portions. The x-axis may coincide with or parallel to a straight line connecting two convex portions among the plurality of first convex portions. The y-axis may correspond to a straight line connecting two convex portions among the plurality of second convex portions. The y-axis may coincide with or parallel to a straight line connecting the two convex portions among the plurality of second convex portions. In a modified embodiment, the first protrusion may be the second protrusion **1320** and the second protrusion may be the first protrusion **1310.**

The moving plate **1300** may comprise a first protrusion **1310.** The first protrusion **1310** may be disposed in the housing **1110.** The first protrusion **1310** may be in contact with the housing **1110.** The first protrusion **1310** may be disposed in the groove **1115** of the housing **1110.** The first protrusion **1310** may provide a first axis tilt center with respect to the holder **1210.** The first protrusion **1310** may provide an x-axis tilt center for the holder **1210.** The first protrusion **1310** may comprise two first protrusions. The two first protrusions may be spaced apart from each other in the x-axis direction. The two first protrusions may be disposed on the x-axis. The holder **1210** may be tilted around the first protrusion **1310** of the moving plate **1300** by the first driving unit **1410.** The holder **1210** may be tilted up and down directions about the first protrusion **1310** of the moving plate **1300** by the first driving unit **1410.**

A first axis of the moving plate **1300** may be defined by a first protrusion **1310** of the moving plate **1300** and a groove **1115** of the housing **1110.** In the present embodiment, by disposing the first protrusion **1310** of the moving plate **1300** in the housing **1110** side rather than the holder **1210** side, the rotation center of the tilt about the first axis can be further away. Through this, the accuracy of the Hall value for detecting the amount of the tilt movement of the first axis may be increased. A mechanical stroke for the x-axis tilt driving can be secured.

The moving plate **1300** may comprise a second protrusion **1320.** The second protrusion **1320** may be disposed in the holder **1210.** The second protrusion **1320** may be in contact with the holder **1210.** The second protrusion **1320** may be disposed in the groove **1211** of the holder **1210.** The second protrusion **1320** may provide a second axis tilt center perpendicular to the first axis for the holder **1210.** The second protrusion **1320** may provide a y-axis tilt center for the holder **1210.** The second protrusion **1320** may comprise two second protrusions. The two second protrusions may be spaced apart from each other in the y-axis direction. The two second protrusions may be disposed on the y-axis. The holder **1210** may be tilted around the second protrusion **1320** of the moving plate **1300** by the second driving unit **1420.** The holder **1210** may be tilted in the left and right directions with respect to the second protrusion **1320** of the moving plate **1300** by the second driving unit **1420.**

As a modified embodiment, the first protrusion **1310** of the moving plate **1300** provides the y-axis tilt center to the holder **1210,** and the second protrusion **1320** of the moving plate **1300** may provide the x-axis tilt center.

The reflective member driving device **1000** may comprise grease. Grease may be disposed between the moving plate **1300** and the housing **1110.** The grease may be formed of a material different from that of the damper **1500.** The grease may be spaced apart from the damper **1500.** Grease may be distinguished from the damper **1500.** Grease may be applied in a shape different from that of the damper 1500. Grease may be applied at a different location than the damper **1500.**

The reflective member driving device **1000** may comprise a driving unit **1400.** The driving unit **1400** may move the moving part **1200** against the fixed part **1100.** The driving unit **1400** may tilt the moving part **1200** against the fixed part **1100.** The driving unit **1400** may tilt the holder **1210.** The driving unit **1400** may tilt the moving part **1200** with respect to the x-axis and the y-axis perpendicular to each other and of the moving plate **1300.** The driving unit **1400** may comprise a coil and a magnet. The driving unit **1400** may move the moving part **1200** through electromagnetic interaction. In a modified embodiment, the driving unit **1400** may comprise a shape memory alloy (SMA).

The driving unit **1400** may comprise a first driving unit **1410** and a second driving unit **1420.** The first driving unit **1410** may comprise a first driving magnet **1411** and a first coil **1412.** It may comprise a second driving unit **1420,** a second driving magnet **1421,** and a second coil **1422.** The first driving magnet **1411** and the first coil **1412** may tilt the holder **1210** about the first axis. The second driving magnet **1421** and the second coil **1422** may tilt the holder **1210** about a second axis perpendicular to the first axis. One of the first driving magnet **1411** and the second driving magnet **1421** may be referred to as a third magnet, and the other may be referred to as a fourth magnet.

The driving unit **1400** may comprise a first driving unit **1410.** The first driving unit **1410** may tilt the moving part **1200** against the fixed part **1100** about a first axis. The first driving unit **1410** may tilt the holder **1210** with respect to a first axis of the moving plate **1300.** The first driving unit **1410** may tilt the moving part **1200** about the x-axis against the fixed part **1100.** The first driving unit **1410** may comprise a coil and a magnet. The first driving unit **1410** may move the moving part **1200** through electromagnetic interaction. As a modified embodiment, the first driving unit **1410** may comprise a shape memory alloy (SMA).

The first driving unit **1410** may comprise a first driving magnet **1411.** The first driving magnet **1411** may be disposed in the holder **1210.** The first driving magnet **1411** may be disposed on a lower surface of the holder **1210.** The first driving magnet **1411** may be fixed to the holder **1210.** The first driving magnet **1411** may be fixed to the holder **1210** by an adhesive. The first driving magnet **1411** may be disposed between the holder **1210** and the lower surface of the housing **1110.** The first driving magnet **1411** may be disposed between the holder **1210** and the lower plate of the housing **1110.** The first driving magnet **1411** may move integrally with the holder **1210.** The first driving magnet **1411** may tilt the holder **1210.** The first driving magnet **1411** may tilt the holder **1210** against the first axis. The first driving magnet **1411** may be disposed to face the first coil **1412.** The first driving magnet **1411** may face the first coil **1412.** The first driving magnet **1411** may be disposed at a position corresponding to the first coil **1412.** The first driving magnet **1411** may interact with the first coil **1412.** The first driving magnet **1411** may electromagnetically interact with the first coil **1412.** At least a portion of the first driving magnet **1411** may be disposed in the groove **1217** of the holder **1210.**

The first driving magnet **1411** may comprise a first surface in a direction toward the reflective member **1220.** The second magnet **1120** may comprise a first surface in a direction toward the reflective member **1220.** The first surface of the first driving magnet **1411** may comprise a first region closest to the second magnet **1120.** The first region of the first driving magnet **1411** may have a polarity different from that of the first surface of the second magnet **1120.** The first surface of the first driving magnet **1411** may comprise a second region having a polarity different from that of the first region. A first region of the first driving magnet **1411** has an S pole and a second region may have an N pole. At this time, the first surface of the second magnet **1120** may have an N pole. As a modified embodiment, the first region of the first driving magnet **1411** has an N pole and the second region may have an S pole.

In the present embodiment, magnetic field interference can be minimized through the disposement of the magnet polarities of the first driving magnet **1411** and the second magnet **1120.**

The first driving magnet **1411** may comprise a second surface opposite to the first surface of the first driving magnet **1411.** The second surface of the first driving magnet **1411** may comprise a third region having a polarity different from that of the first region. The second surface of the first driving magnet **1411** may comprise a fourth region having a polarity different from that of the second region. The second surface of the first driving magnet **1411** may face the first coil **1412.** The third region has an N pole and the fourth region may have an S pole. As a modified embodiment, the third region has an S pole and the fourth region may have an N pole.

The first driving magnet **1411** may comprise a neutral portion disposed between the first region and the second region. The first driving magnet **1411** may comprise a neutral portion disposed between the third region and the fourth region. The neutral portion may be a portion having a polarity close to neutral. The neutral portion may be a void. Or, as a modified embodiment, the neutral portion may be disposed between the first region and the third region and between the second region and the fourth region.

A region of the first driving magnet **1411** closest to the first surface of the second magnet **1120** may have a polarity for generating an attractive force with the first surface of the second magnet **1120.** The first surface of the second magnet **1120** and the first region of the first driving magnet **1411** closest to the first surface of the second magnet **1120** may generate an attractive force to each other.

Each of the second magnet **1120** and the first driving magnet **1411** may comprise a first surface facing the central portion of the moving part **1200.** The first surface of the first driving magnet **1411** may comprise a first region and a second region having different polarities. The first surface of the second magnet **1120** may be disposed closer to the first driving magnet **1411** than to the second driving magnet **1421.** The first region of the first driving magnet **1411** may be disposed closer to the second magnet **1120** than the second region. A first region of the first driving magnet **1411** may have a polarity different from that of the first surface of the second magnet **1120.**

Each of the second magnet **1120** and the first driving magnet **1411** may comprise a first surface facing the central portion of the holder **1210.** The first surface of the first driving magnet **1411** and the first surface of the second magnet **1120** may comprise regions having different polarities.

The first driving unit **1410** may comprise a first coil **1412.** The first coil **1412** may be disposed on the substrate **1130.** The first coil **1412** may be disposed in the housing **1110.** The first coil **1412** may be disposed on the substrate **1130** at a position corresponding to the first driving magnet **1411.** The first coil **1412** may be disposed below the holder **1210.** The first coil **1412** may interact with the first driving magnet **1411.** When a current is applied to the first coil **1412,** an electromagnetic field is formed around the first coil **1412** to interact with the first driving magnet **1411.** The first driving magnet **1411** and the first coil **1412** may tilt the holder **1210** with respect to the first axis. At this time, the first axis may be an x-axis.

In the present embodiment, a first direction driving current may be applied to the first coil **1412** to drive the first coil **1412.** At this time, the second direction driving current opposite to the first direction driving current may not be used to drive the first coil **1412.** That is, only a current in either one of a reverse direction or a forward direction may be supplied to the first coil **1412.**

The reflective member driving device **1000** may comprise a Hall sensor **1413.** The Hall sensor **1413** may detect the first driving magnet **1411.** The Hall sensor **1413** may detect a magnetic force of the first driving magnet **1411.** The Hall sensor **1413** may detect the position of the holder **1210.** The Hall sensor **1413** may detect the position of the reflective member **1220.** The Hall sensor **1413** may detect a tilt amount centered about the x-axis of the holder **1210.**

The reflective member driving device **1000** may comprise a yoke **1414.** The yoke **1414** may be disposed between the first driving magnet **1411** and the holder **1210.** The yoke **1414** may be formed in a shape corresponding to the first driving magnet **1411.** The yoke **1414** may increase the interaction force between the first driving magnet **1411** and the first coil **1412.**

The driving unit **1400** may comprise a second driving unit **1420.** The second driving unit **1420** may tilt the moving part **1200** about the second axis against the fixed part **1100.** The second driving unit **1420** may tilt the holder **1210** with respect to a second axis perpendicular to the first axis of the moving plate **1300.** The second driving unit **1420** may tilt the moving part **1200** centered about the y-axis against the fixed part **1100.** The second driving unit **1420** may comprise a coil and a magnet. The second driving unit **1420** may move the moving part **1200** through electromagnetic interaction. As a modified embodiment, the second driving unit **1420** may comprise shape memory alloy (SMA).

The second driving unit **1420** may comprise a second driving magnet **1421.** The second driving magnet **1421** may be disposed in the holder **1210.** The second driving magnet **1421** may be disposed on both side surfaces of the holder **1210.** The second driving magnet **1421** may be fixed to the holder **1210.** The second driving magnet **1421** may be fixed to the holder **1210** by an adhesive. The second driving magnet **1421** may be disposed between the holder **1210** and a side surface of the housing **1110.** The second driving magnet **1421** may be disposed between the holder **1210** and a side plate of the housing **1110.** The second driving magnet **1421** may move integrally with the holder **1210.** The second driving magnet **1421** may tilt the holder **1210.** The second driving magnet **1421** may tilt the holder **1210** with respect to a second axis perpendicular to the first axis. The second driving magnet **1421** may be disposed to face the second coil **1422.** The second driving magnet **1421** may face the second coil **1422.** The second driving magnet **1421** may be disposed at a position corresponding to the second coil **1422.** The second driving magnet **1421** may interact with the second coil **1422.** The second driving magnet **1421** may electromagnetically interact with the second coil **1422.**

The second driving magnet **1421** may comprise a neutral portion having no polarity. The neutral portion may be a void. The neutral portion may be disposed between the N pole and the S pole. The neutral portion may be disposed between a first portion corresponding to the front side of the second driving magnet **1421** and a second portion corresponding to the rear side of the second driving magnet **1421.** Or, the neutral portion may be disposed between the inner side portion and the outer side portion of the second driving magnet **1421.**

The second driving magnet **1421** may comprise a first sub-magnet **1421-1.** The first sub-magnet **1421-1** may be disposed on one side of the holder **1210.** The first sub-magnet **1421-1** may be disposed to face a first sub-coil **1422-1.** The first sub-magnet **1421-1** may face the first sub-coil **1422-1.** The first sub-magnet **1421-1** may be disposed at a position corresponding to the first sub-coil **1422-1.** The first sub-magnet **1421-1** may interact with the first sub-coil **1422-1.** The first sub-magnet **1421-1** may electromagnetically interact with the first sub-coil **1422-1.**

The second driving magnet **1421** may comprise a second sub-magnet **1421-2.** The second sub-magnet **1421-2** may be disposed on the other side of the holder **1210.** The second sub-magnet **1421-2** may be disposed at an opposite side of the first sub-magnet **1421-1.** The second sub-magnet **1421-2** may have the same size and shape as the first sub-magnet **1421-1.** The second sub-magnet **1421-2** may be disposed to face the second sub-coil **1422-2.** The second sub-magnet **1421-2** may face the second sub-coil **1422-2.** The second sub-magnet **1421-2** may be disposed at a position corresponding to the second sub-coil **1422-2.** The second sub-magnet **1421-2** may interact with the second sub-coil **1422-2.** The second sub-magnet **1421-2** may electromagnetically interact with the second sub-coil **1422-2.**

The second driving unit **1420** may comprise a second coil **1422.** The second coil **1422** may be disposed on the substrate **1130.** The second coil **1422** may be disposed in the housing **1110.** The second coil **1422** may be disposed on the second portion of the substrate **1130.** The second coil **1422** may be disposed on both side surfaces of the holder **1210.** When a current is applied to the second coil **1422,** an electromagnetic field is formed around the second coil **1422** to interact with the second driving magnet **1421.** The second coil **1422** may comprise two sub-coils **1421-1** and **1421-2** disposed opposite to each other with respect to the holder **1210.** The two sub-coils **1421-1** and **1421-2** may be electrically connected to each other. The second driving magnet **1421** and the second coil **1422** may tilt the holder **1210** with respect to a second axis perpendicular to the first axis. At this time, the second axis may be a y-axis. The first axis may be an x-axis, and the z-axis may be an optical axis of the image sensor **3400.**

The second coil **1422** may comprise a first sub-coil **1422-1.** The first sub-coil **1422-1** may be disposed on the substrate **1130.** The first sub-coil **1422-1** may be disposed in the housing **1110.** The first sub-coil **1422-1** may be disposed on the second portion of the substrate **1130.** The first sub-coil **1422-1** may be disposed on the side of the holder **1210.** When a current is applied to the first sub-coil **1422-1,** an electromagnetic field is formed around the first sub-coil **1422-1** to interact with the first sub-magnet **1421-1.**

The second coil **1422** may comprise a second sub-coil **1422-2.** The second sub-coil **1422-2** may be disposed on the substrate **1130.** The second sub-coil **1422-2** may be disposed in the housing **1110.** The second sub-coil **1422-2** may be disposed on the second portion of the substrate **1130.** The second sub-coil **1422-2** may be disposed on the side of the holder **1210.** When a current is applied to the second sub-coil **1422-2,** an electromagnetic field is formed around the second sub-coil **1422-2** to interact with the second sub-magnet **1421-2.**

The second driving magnet **1421** may comprise a first sub-magnet **1421-1** disposed on a first side surface of the holder **1210** and a second sub-magnet **1421-2** disposed on a second side surface of the holder **1210.** The second coil **1422** may comprise a first sub-coil **1422-1** disposed on the substrate and disposed at a position corresponding to the first sub-magnet **1421-1,** and a second sub-coil **1422-2** disposed on the substrate and disposed at a position corresponding to the second sub-magnet **1421-2.**

The reflective member driving device **1000** may comprise a Hall sensor **1423.** The Hall sensor **1423** may detect the second driving magnet **1421.** The Hall sensor **1423** may detect a magnetic force of the second driving magnet **1421.** The Hall sensor **1423** may detect the position of the holder **1210.** The Hall sensor **1423** may detect the position of the reflective member **1220.** The Hall sensor **1423** may detect a tilt amount centered about the y-axis of the holder **1210.**

The reflective member driving device **1000** may comprise a yoke **1424.** The yoke **1424** may be disposed between the second driving magnet **1421** and the holder **1210.** The yoke **1424** may be formed to have a shape corresponding to that of the second driving magnet **1421.** The yoke **1424** may increase the interaction force between the second driving magnet **1421** and the second coil **1422.**

The reflective member driving device **1000** may comprise a damper **1500.** The damper **1500** may comprise an adhesive material. The damper **1500** may have viscosity. The damper **1500** may be disposed between the fixed part **1100** and the moving part **1200.** The damper **1500** may be disposed between the rigid mover **1230** and the housing **1110.** The damper **1500** may connect the rigid mover **1230** and the housing **1110.** The damper **1500** may be coupled to the rigid mover **1230** and the housing **1110.** The damper **1500** may be disposed on the rigid mover **1230.** The damper **1500** may be coupled with the rigid mover **1230.** The damper **1500** may be coupled to the rigid mover **1230.** The rigid mover **1230** may be coupled to the housing **1110.** The housing **1110** and the rigid mover **1230** may be attached to each other by the damper **1500.**

The damper **1500** may be disposed on at least one among an upper portion and a lower portion of the first portion **1111** of the housing **1110.** The damper **1500** may connect the protruded portion **1231** of the rigid mover **1230** and the housing **1110.** At least a portion of the damper **1500** may be disposed in the groove **1119** of the housing **1110** between the protruded portion **1231** of the rigid mover **1230** and the housing **1110.** At least a portion of the damper **1500** may be disposed in a second groove being recessed from the first groove portion of the housing **1110.**

In the present embodiment, a bond of a gel component that acts as a damper between the housing **1110** and the rigid mover **1230** may be applied. Through this, it is possible to increase the responsiveness of the actuator by securing a phase margin while maintaining a gain value. That is, FRA characteristics may be improved. In particular, a response characteristic of a tilt centered about the x-axis may be improved. The tilt centered about the y-axis (yaw) can also be enhanced.

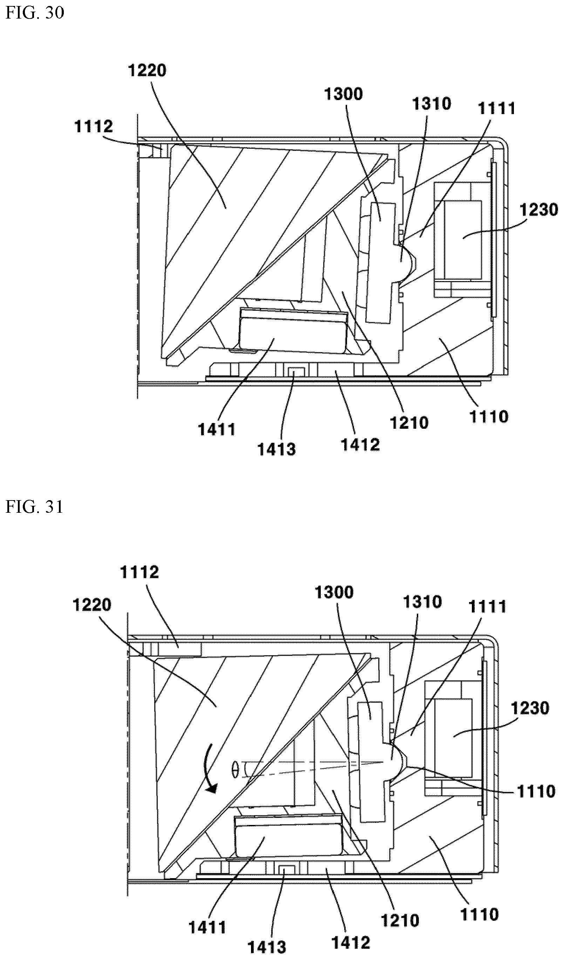

FIG. 30 and 31 are diagrams for explaining the tilt about the x-axis of a reflective member driving device according to the present embodiment.

In the present embodiment, the holder **1210** may be disposed between the upper plate and the lower plate of the housing **1110** in an initial state in which current is not supplied to the first driving unit **1410.** At this time, the holder **1210** may be in contact with the upper plate of the housing **1110** (refer to FIG. 30).

At this time, when a current in a first direction is applied to the first coil **1412,** the holder **1210** may be tilted downward centered about the first protrusion **1310** of the moving plate **1300** by the electromagnetic interaction between the first coil **1412** and the first driving magnet **1411** (refer to θ of FIG. 31).

That is, current is applied to the first coil **1412** so that the holder **1210** may be tilted downward against the housing **1110** centered about the x-axis. At this time, since the reflective member **1220** is also tilted together with the holder **1210,** the optical path is changed, so that the shaking detected by the gyro sensor **1150** can be offset.

In the present embodiment, only the current in the first direction may be used for controlling the first coil **1412** and the current in the first direction opposite to the first direction may not be used. Through this, the separation and removal problem of the moving plate **1300** that may occur when the current in the second direction is applied to the first coil **1412** can be fundamentally blocked.

In more detail, as a comparative example, when the centers of the first magnet **1240** and the second magnet **1120** are disposed at the same height as the first protrusion **1310** of the moving plate **1300,** the moving part **1200** is slid by the electromagnetic force and the moving plate **1300** may be separated and removed when the repulsive force between the first magnet **1240** and the second magnet **1120** and the electromagnetic force between the first coil **1412** and the first driving magnet **1411** are non-uniform. When the electromagnetic force between the first coil **1412** and the first driving magnet **1411** is greater than the repulsive force between the first magnet **1240** and the second magnet **1120,** a phenomenon in that the rigid mover **1230** falls out as much as the gap between the first magnet **1240** and the second magnet **1120** occurs and the moving plate **1300** may be separated. This may be a cause of poor Hall calibration dynamic characteristics.

In the present embodiment, the center axis of the repulsive force and the center axis of the x-axis driving force may deviate by a certain distance. Through this, the reflective member **1220** may be mechanically shifted in an upward direction. At this time, the upward direction may be a direction opposite to gravity.

In the present embodiment, it can be controlled by code rather than current control. In the pivot structure like the present embodiment, it is difficult to know the initial position in the open state for reasons such as deflection due to gravity, so the closed method (a method in which the moving part **1200** is in contact with the fixed part **1100** in the initial state) may be required. In the present embodiment, since it is controlled by a closed method, more precise driving can be performed. Furthermore, in the present embodiment, the noise generated by the moving part **1200** moving here and there can also be minimized by the closed method.

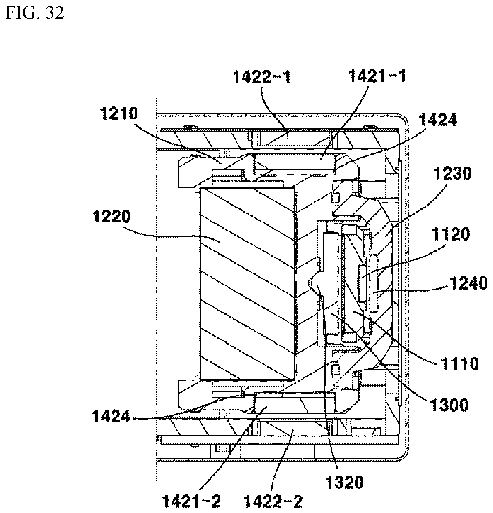

FIGS. 32 to 34 are views for explaining a tilt about the y-axis of a reflective member driving device according to the present embodiment.

In the present embodiment, in an initial state in which current is not supplied to the second driving unit **1420,** the holder **1210** may be disposed between the both side plates of the housing **1110.** At this time, the holder **1210** may be in a state of being spaced apart from all of the both side plates of the housing **1110** (refer to FIG. 32).

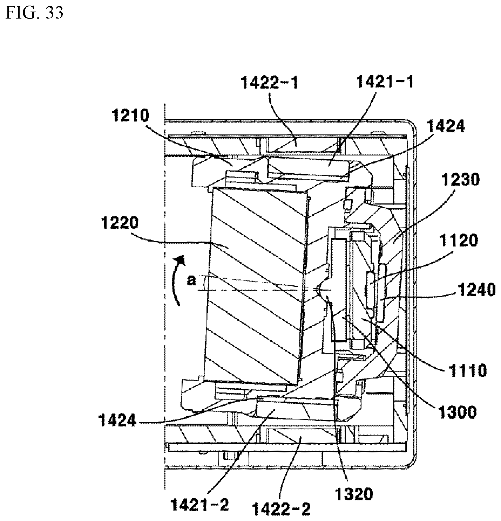

At this time, when a current in the first direction is applied to the second coil **1422,** the holder **1210** may be tilted to one side centered about the second protrusion **1320** of the moving plate **1300** due to the electromagnetic interaction between the second coil **1422** and the second driving magnet **1421** (refer to FIG. 33 a).

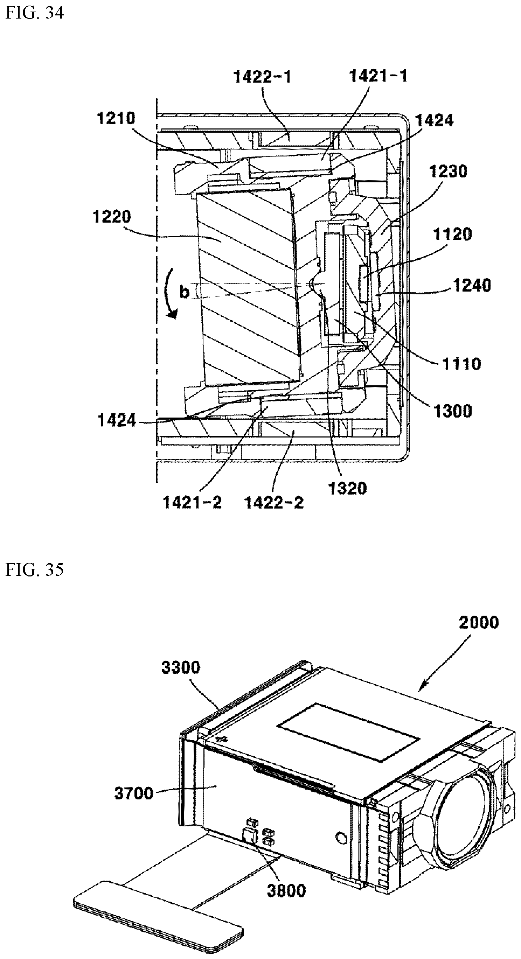

Meanwhile, when a current in a second direction opposite to the first direction is applied to the second coil **1422,** the holder **1210** may be tilted to the other side centered about the second protrusion **1320** of the moving plate **1300** due to the electromagnetic interaction between the second coil **1422** and the second driving magnet **1421** (refer to FIG. 34 b).

That is, current is selectively applied to the second coil **1422** in both directions so that the holder **1210** can be tilted in the left and right directions against the housing **1110** centered about the y-axis. At this time, since the reflective member **1220** is also tilted together with the holder **1210,** the optical path is changed, so that the shaking detected by the gyro sensor **1150** may be offset. Therefore, in the present embodiment, hand shake correction for the x-axis tilting and the y-axis tilting, that is, the 2-axis tilting can be performed.

Hereinafter, a lens driving device according to the present embodiment will be described with reference to the drawings.

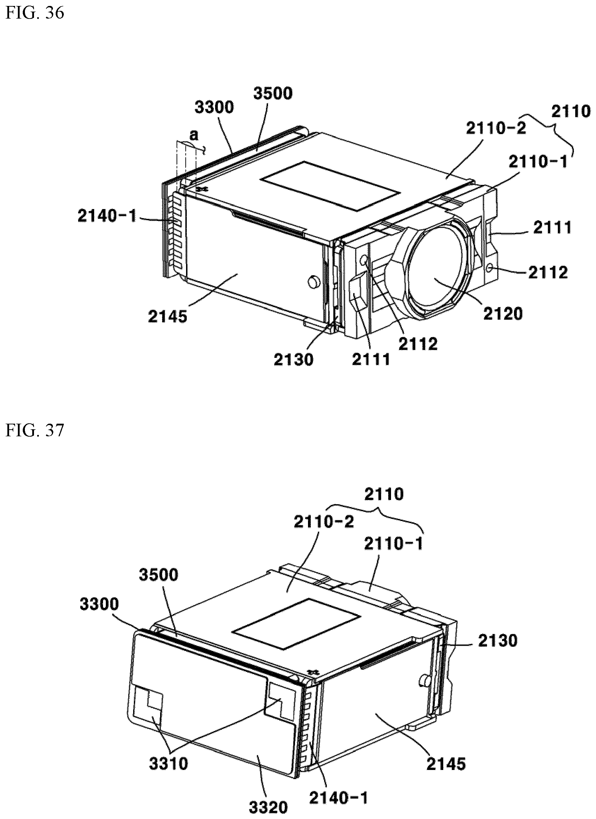

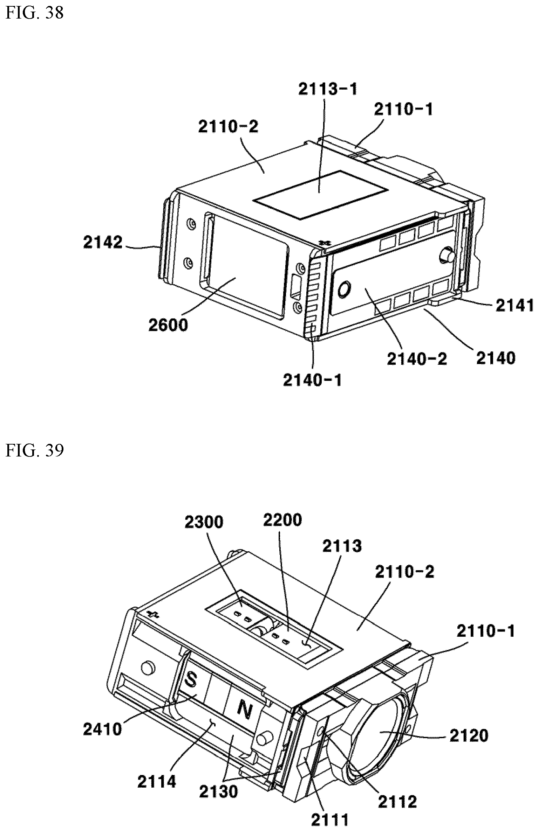

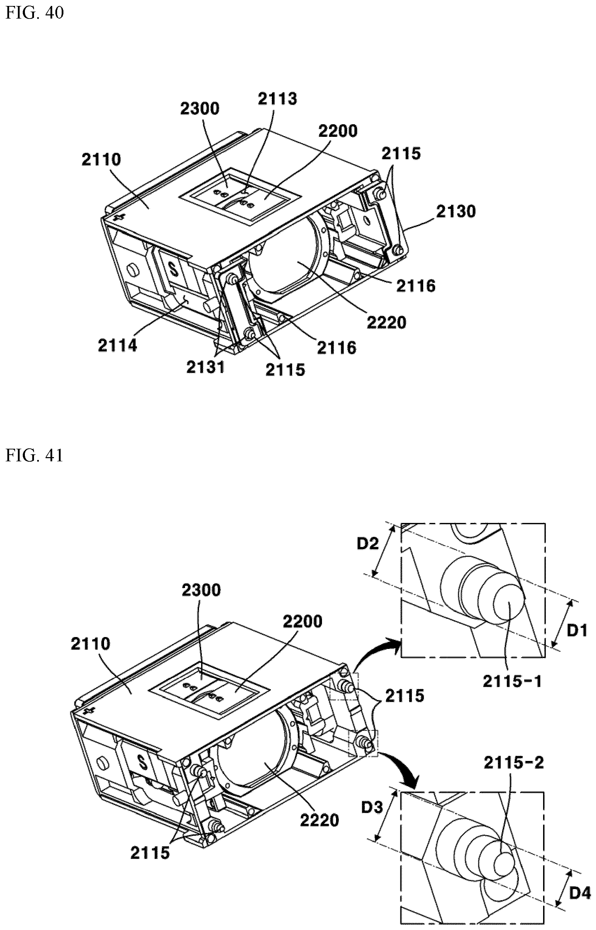

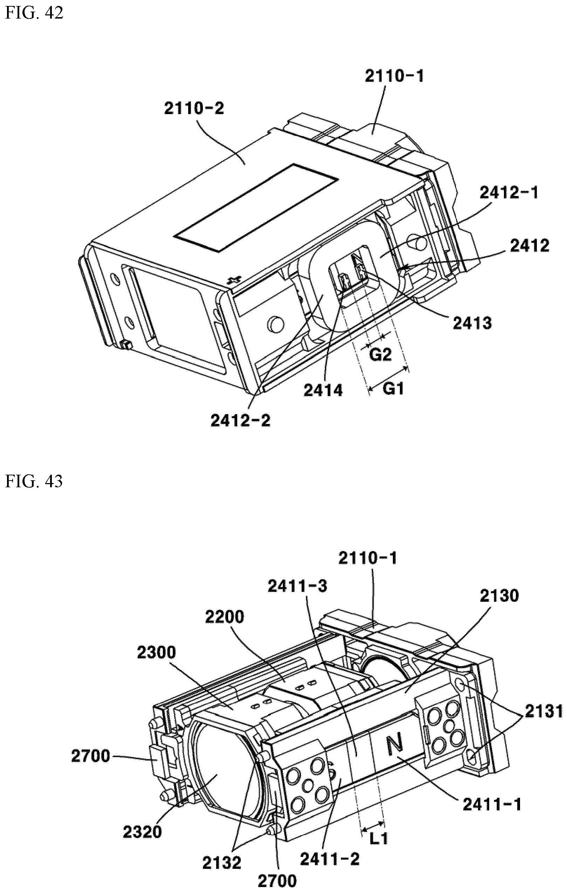

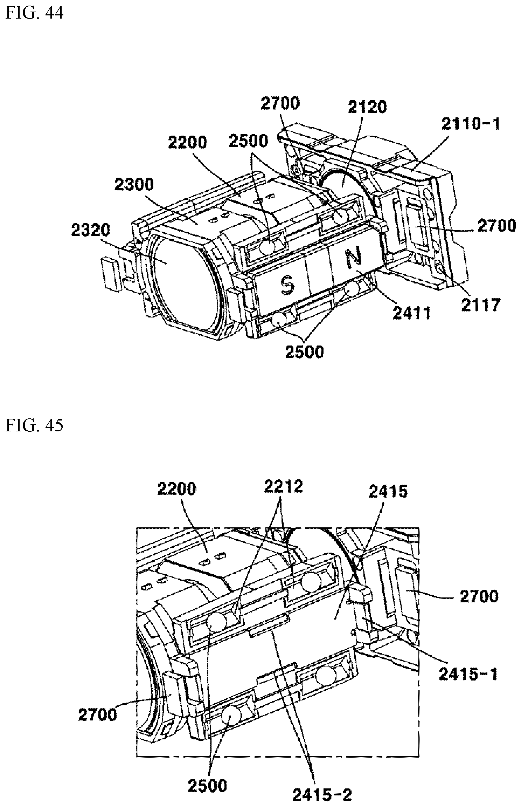

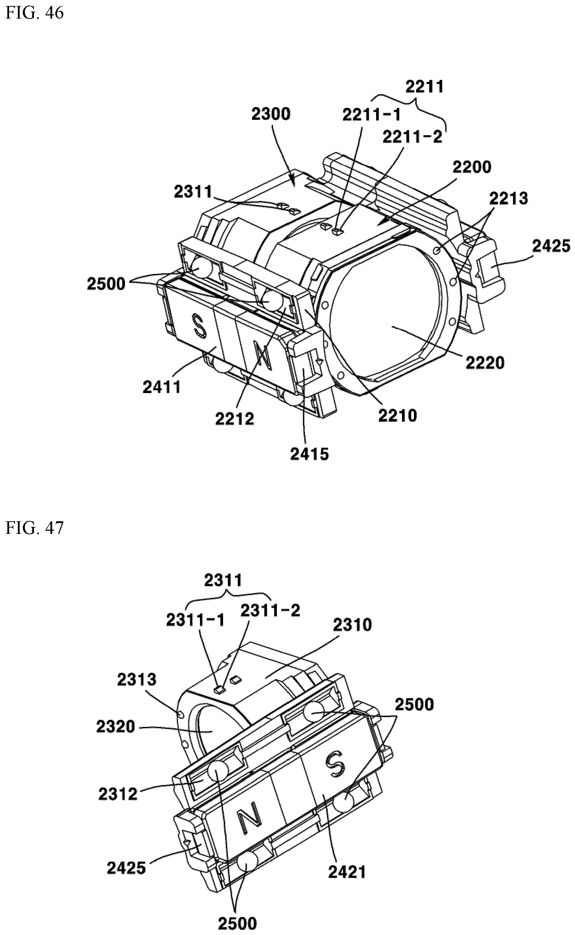

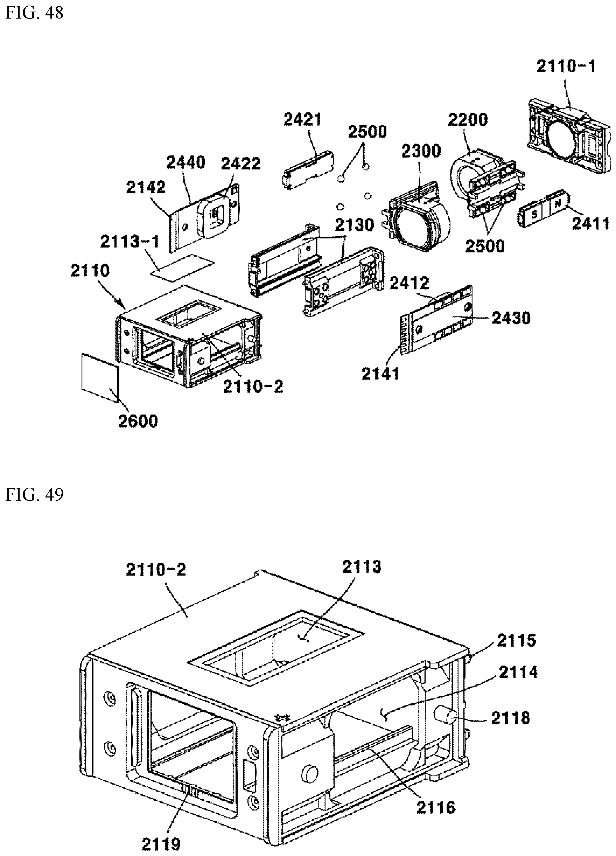

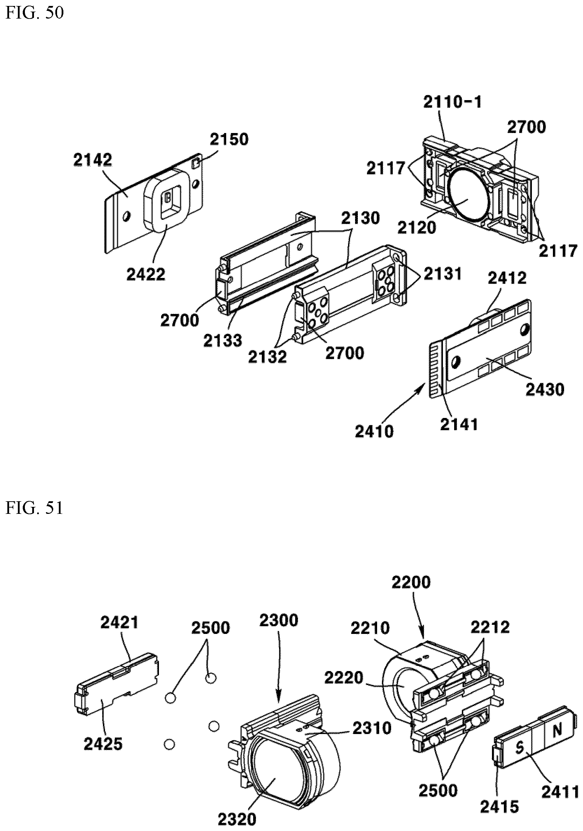

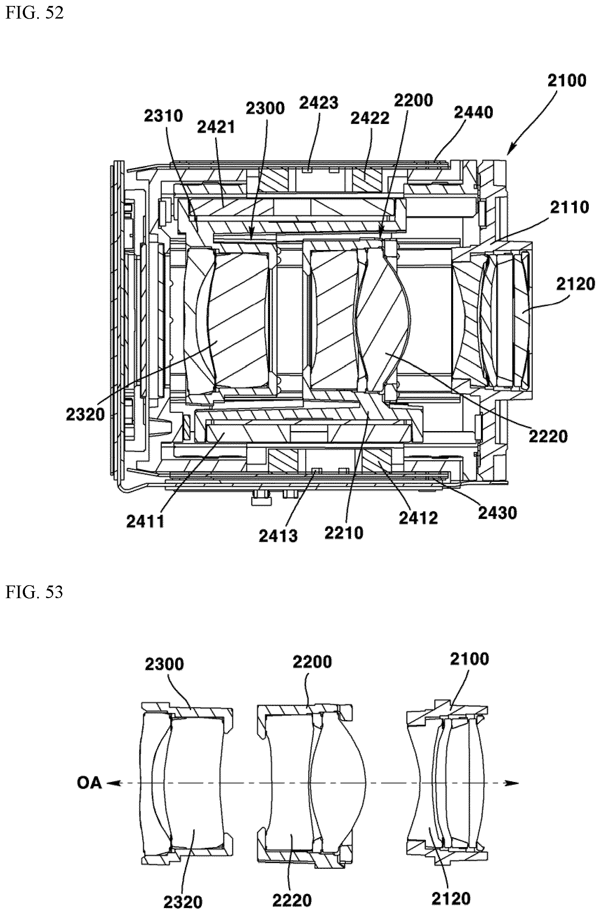

FIG. 35 is a perspective view of a lens driving device according to the present embodiment; FIG. 36 is a perspective view in which some configurations of a lens driving device according to the present embodiment are omitted; FIG. 37 is a perspective view of a lens driving device in the state illustrated in FIG. 36 as viewed from another direction; FIG. 38 is a perspective view in which some configurations of a lens driving device according to the present embodiment are omitted; FIG. 39 is a perspective view of a state in which configurations such as a substrate and a coil are omitted in a lens driving device according to the present embodiment; FIG. 40 is a perspective view of a state in which the first lens and related components are omitted in the lens driving device of the state illustrated in FIG. 39; FIG. 41 is a perspective view and a partially enlarged view of a part of a lens driving device according to the present embodiment; FIG. 42 is a diagram for explaining an disposement structure of a coil and a sensor of a lens driving device according to the present embodiment; FIG. 43 is a perspective view illustrating a state in which the second housing is omitted in the lens driving device of the state illustrated in FIG. 39; FIG. 44 is a perspective view of a state in which a guide rail is omitted from the lens driving device of the state illustrated in FIG. 43; FIG. 45 is an enlarged view of some configurations of a lens driving device according to the present embodiment; FIG. 46 is a perspective view of a first moving part and a second moving part of a lens driving device according to the present embodiment, and a related configuration thereof; FIG. 47 is a perspective view of a second moving part of the lens driving device according to the present embodiment and a related configuration; FIG. 48 is an exploded perspective view of a lens driving device according to the present embodiment; FIG. 49 is a perspective view of a second housing of a lens driving device according to the present embodiment; FIGS. 50 and 51 are exploded perspective views of some configurations of a lens driving device according to the present embodiment; and FIG. 52 is a cross-sectional view of a lens driving device according to the present embodiment.

The lens driving device **2000** may perform a zoom function. The lens driving device **2000** may perform a continuous zoom function. The lens driving device **2000** may perform an auto focus (AF) function. The lens driving device **2000** may move a lens. The lens driving device **2000** may move the lens along an optical axis. The lens driving device **2000** may move lenses formed in a plurality of groups by each group. The lens driving device **2000** may move a second group lens. The lens driving device **2000** may move a third group lens. The lens driving device **2000** may be a lens actuator. The lens driving device **2000** may be an AF actuator. The lens driving device **2000** may be a zoom actuator. The lens driving device **2000** may comprise a voice coil motor (VCM).

The lens driving device **2000** may comprise a lens. Or, the lens may be described as one configuration of the camera device **10** rather than one configuration of the lens driving device **2000.** The lens may be disposed in an optical path formed by the reflective member **1220** and the image sensor **3400** of the reflective member driving device **1000.** The lens may comprise a plurality of lenses. The plurality of lenses may form a plurality of groups. The lenses may form three groups. The lens may comprise first to third lens groups. A first lens group, a second lens group, and a third lens group may be sequentially disposed between the reflective member **1220** and the image sensor **3400.** The first lens group may comprise a first lens **2120.** The second lens group may comprise a second lens **2220.** The third lens group may comprise a third lens **2320.**

The lens driving device **2000** may comprise a fixed part **2100.** The fixed part **2100** may be a relatively fixed part when the first moving part **2200** and the second moving part **2300** are moved.

The lens driving device **2000** may comprise a housing **2110.** The fixed part **2100** may comprise a housing **2110.** The housing **2110** may be disposed outside the first holder **2210** and the second holder **2310.** The housing **2110** may accommodate at least a portion of the first holder **2210** and the second holder **2310.** The housing **2110** may comprise a front plate, a rear plate, and a plurality of connection plates. At this time, the front plate may be referred to as an upper plate, the rear plate may be referred to as a lower plate, and the connection plate may be referred to as a side plate.

The housing **2110** may comprise a first housing **2110-1.** The first housing **2110-1** may be a cover. The first housing **2110-1** may form a front plate of the housing **2110.** The first housing **2110-1** may be coupled to the first lens **2120.** The first housing **2110-1** may be a cover. The first housing **2110-1** may be coupled to the reflective member driving device **1000.** A first lens **2120** may be fixed to the first housing **2110-1.**

The housing **2110** may comprise a second housing **2110-2.** The second housing **2110-2** may be a housing. The second housing **2110-2** may form a rear plate and a connection plate of the housing **2110.** The second housing **2110-2** may be open forward. The first housing **2110-1** may be coupled to the front of the second housing **2110-2.** A portion of a guide rail **2130** may be disposed between the first housing **2110-1** and the second housing **2110-2.**

The housing **2110** may comprise a first groove **2111.** The first groove **2111** may be coupled to the protruded portion **1116** of the housing **1110** of the reflective member driving device **1000.** The first groove **2111** may be formed in a shape corresponding to the protruded portion **1116** of the reflective member driving device **1000.** An adhesive for coupling the reflective member driving device **1000** to the lens driving device **2000** may be disposed in the first groove **2111.**

The housing **2110** may comprise a second groove **2112.** The second groove **2112** may be coupled to the protrusion **1117** of the housing **1110** of the reflective member driving device **1000.** The protrusion **1117** of the reflective member driving device **1000** may be inserted into the second groove **2112.** The second groove **2112** may be formed in a shape corresponding to the protrusion **1117** of the reflective member driving device **1000.** An adhesive for coupling the reflective member driving device **1000** to the lens driving device **2000** may be disposed in the second groove **2112.**

The housing **2110** may comprise a first hole **2113.** The first hole **2113** may expose the protrusion **2211** of the first holder **2210** and the protrusion **2311** of the second holder **2310.** The first hole **2113** may be formed in the connection plate of the housing **2110.** In the manufacturing test step, by checking the protrusion **2211** of the first holder **2210** and the protrusion **2311** of the second holder **2310** being exposed through the first hole **2113,** it can be checked whether the lens driving device **2000** is operating normally.

The housing **2110** may comprise a plate **2113-1.** The plate **2113-1** may cover the first hole **2113.** The plate **2113-1** is disposed in the first hole **2113** and may close the first hole **2113.**

The housing **2110** may comprise a second hole **2114.** The second hole **2114** may be a coil accommodating hole in which a first coil **2412** and a second coil **2422** are disposed. The first coil **2412** and the second coil **2422** may be disposed in the second hole **2114.** The second hole **2114** may be formed to be larger than the first coil **2412** and the second coil **2422.**

The housing **2110** may comprise a protrusion **2115.** The protrusion **2115** may be formed in the second housing **2110-2.** The protrusion **2115** may be formed as a two-step protrusion. The protrusion **2115** may be coupled to a guide rail **2130.** The protrusion **2115** may be coupled to the first housing **2110-1.** The guide rail **2130** may be coupled to a portion having a large diameter of the protrusion **2115** and the first housing **2110-1** may be coupled to a portion having a small diameter of the protrusion **2115.**

The protrusion **2115** may comprise a first protrusion **2115-1.** The first protrusion **2115-1** may comprise a first portion **2115a** having a first diameter **D2** and a second portion **2115b** being protruded from the first portion **2115a** and having a second diameter **D1.** The protrusion **2115** may comprise a second protrusion **2115-2.** The second protrusion **2115-2** may comprise a third portion having a third diameter **D3** and a fourth portion being protruded from the third portion and having a fourth diameter **D4.** At this time, the fourth diameter **D4** may be smaller than the second diameter **D1.** Through this, the first protrusion **2115-1** may be more tightly coupled to the first housing **2110-1** than the second protrusion **2115-2.**

The housing **2110** may comprise a guide protrusion **2116.** The guide protrusion **2116** may be formed on an inner surface of the housing **2110.** The guide protrusion **2116** may be formed in a shape corresponding to the shape of at least a portion of the first holder **2210** and the second holder **2310.** Through this, the guide protrusion **2116** may guide the movement of the first holder **2210** and the second holder **2310** in an optical axis direction. At this time, the optical axis direction may be a z-axis direction perpendicular to the x-axis and the y-axis. The guide protrusion **2116** may be disposed in the optical axis direction. The guide protrusion **2116** may be extended in an optical axis direction.

The housing **2110** may comprise a groove **2117.** The groove **2117** may be formed in the first housing **2110-1.** The groove **2117** of the first housing **2110-1** may be coupled to the protrusion **2115** of the second housing **2110-2.**

The housing **2110** may comprise a protrusion **2118.** The protrusion **2118** may be coupled to the substrate **2140.** The protrusion **2118** may be inserted into the groove of the substrate **2140.** The protrusion **2118** may be formed to have a corresponding size and shape to fit into the groove of the substrate **2140.**

The housing **2110** may comprise a vent hole **2119.** The vent hole **2119** may be formed in the rear plate of the housing **2110.** The vent hole **2119** may form a gap between the housing **2110** and the dummy glass **2600.** Air may flow into the gap between the housing **2110** and the dummy glass **2600.** A gas generated during the curing process of the adhesive may escape through the vent hole **2119.**

The lens driving device **2000** may comprise a first lens **2120.** Or, the first lens **2120** may be described as one configuration of the camera device **10** rather than one configuration of the lens driving device **2000.** The fixed part **2100** may comprise a first lens **2120.** The first lens **2120** may be disposed on an optical axis. The first lens **2120** may be disposed between the reflective member **1220** and the image sensor **3400.** The first lens **2120** may be disposed between the reflective member **1220** and the second lens **2220.** The first lens **2120** may be disposed in the first housing **2110-1.** The first lens **2120** may be fixed to the first housing **2110-1.** The first lens **2120** may maintain a fixed state even when the second lens **2220** and the third lens **2320** are being moved.

The first lens **2120** may be a first lens group. The first lens **2120** may comprise a plurality of lenses. The first lens **2120** may comprise three lenses.

The lens driving device **2000** may comprise a guide rail **2130.** The fixed part **2100** may comprise a guide rail **2130.** The guide rail **2130** may be coupled to the fixed part **2100.** The guide rail **2130** may be coupled between the first housing **2110-1** and the second housing **2110-2.** The guide rail **2130** may be coupled to the protrusion **2115** of the second housing **2110-2.** The guide rail **2130** may guide the movement of the first holder **2210** and the second holder **2310.** The guide rail **2130** may guide the first holder **2210** and the second holder **2310** to move in an optical axis direction. The guide rail **2130** may comprise a rail disposed in the optical axis direction. The guide rail **2130** may comprise a rail being extended in the optical axis direction. The guide rail **2130** may comprise a rail formed so that the ball **2500** rolls.

The lens driving device **2000** may comprise a substrate **2140.** The fixed part **2100** may comprise a substrate **2140.** The substrate **2140** may be disposed in the fixed part **2100.** The substrate **2140** may be disposed on both side surfaces of the housing **2110.** The substrate **2140** may be an FPCB. A first coil **2412** and a second coil **2422** may be disposed on the substrate **2140.**

The substrate **2140** may comprise a first region **2140-1.** The first region **2140-1** may be formed at an end of the substrate **2140.** A terminal may be disposed in the first region **2140-1.** The substrate **2140** may comprise a second region **2140-2.** The first region **2140-1** of the substrate **2140** may be bent inward with respect to the second region **2140-2.** Through this, the size of the printed circuit board **3300** can be minimized while securing a region for soldering disposement that connects the terminals of the board **2140** and the printed circuit board **3300.** The first region **2140-1** may form an obtuse angle with the second region **2140-2.**

The substrate **2140** may comprise a first substrate **2141.** The first substrate **2141** may be disposed at one side of the housing **2110.** A first coil **2412** may be disposed on the first substrate **2141.** First and second Hall sensors **2413** and **2414** may be disposed on the first substrate **2141.**

The substrate **2140** may comprise a second substrate **2142.** The second substrate **2142** may be disposed at the other side of the housing **2110.** The second substrate **2142** may be disposed at an opposite side of the first substrate **2141.** A second coil **2422** may be disposed on the second substrate **2142.** Third and fourth Hall sensors **2423** and **2424** may be disposed on the second substrate **2142.**

The lens driving device **2000** may comprise a suspension (SUS) **2145.** The suspension **2145** may be disposed on the substrate **2140.** The suspension **2145** may reinforce the strength of the substrate **2140.** The suspension **2145** may dissipate heat generated by the substrate **2140.**

The lens driving device **2000** may comprise an EEPROM **2150.** The EEPROM **2150** may be electrically connected to the first coil **2412** and the second coil **2422.** The EEPROM **2150** may be used to control currents applied to the first coil **2412** and the second coil **2422** before connecting the lens driving device **2000** to the driver IC **3900** in the manufacturing stage. That is, the EEPROM **2150** may be used to test whether the lens driving device **2000** operates normally. The EEPROM **2150** may be disposed on an inner surface of the substrate **2140.**

The lens driving device **2000** may comprise a first moving part **2200.** The first moving part **2200** may move against the fixed part **2100.** At least a portion of the first moving part **2200** may be disposed between the fixed part **2100** and the second moving part **2300.** The first moving part **2200** may move between the fixed part **2100** and the second moving part **2300.**

The lens driving device **2000** may comprise a first holder **2210.** The first moving part **2200** may comprise a first holder **2210.** The first holder **2210** may be disposed inside the housing **2110.** The first holder **2210** may move against the housing **2110.** At least a portion of the first holder **2210** may be spaced apart from the housing **2110.** The first holder **2210** may be in contact with the housing **2110.** The first holder **2210** may be in contact with the housing **2110** when moving. Or, in the initial state, the first holder **2210** may be in contact with the housing **2110.**

The first holder **2210** may comprise a protrusion **2211.** The protrusion **2211** may be a test protrusion. The protrusion **2211** may be formed on the outer surface of the first holder **2210.** The protrusion **2211** may be protruded from the first holder **2210.** The protrusion **2211** can be seen from the outside through the first hole **2113** of the housing **2110.** The protrusion **2211** may be used to test whether the lens driving device **2000** operates normally. The protrusion **2211** may comprise a flat surface **2211-1** and an inclined surface **2211-2.**

The first holder **2210** may comprise a rail groove **2212.** A ball **2500** may be disposed in the rail groove **2212.** In the rail groove **2212,** the ball **2500** may be moved by rolling. The rail groove **2212** and the ball **2500** may be in contact at two points. The rail groove **2212** may be disposed in an optical axis direction. The rail groove **2212** may be extended in an optical axis direction.

The rail groove **2212** may comprise a plurality of rail grooves. The rail groove **2212** may comprise four rail grooves. The rail groove **2212** may comprise first to fourth rail grooves. One or more balls **2500** may be disposed in each of the plurality of rail grooves **2212.**

The first holder **2210** may comprise a protrusion **2213.** The protrusion **2213** may be formed on the surface facing the first housing **2110-1** of the first holder **2210.** The first holder **2210** may comprise a first surface facing the first housing **2110-1,** and a plurality of protrusions **2213** formed on the first surface and being in contact with the first housing **2110-1.** The protrusion **2213** may be in contact with the first housing **2110-1** when the first holder **2210** moves in a direction getting closer to the first housing **2110-1.** At this time, when the protrusion **2213** is formed, the contact area between the first holder **2210** and the first housing **2110-1** can be reduced compared to the case where the protrusion **2213** is omitted. Through this, shock and noise generated due to the contact between the first holder **2210** and the first housing **2110-1** can be minimized.

The lens driving device **2000** may comprise a second lens **2220.** Or, the second lens **2220** may be described as one configuration of the camera device **10** rather than one configuration of the lens driving device **2000.** The first moving part **2200** may comprise a second lens **2220.** The second lens **2220** may be disposed in an optical axis. The second lens **2220** may be disposed between the reflective member **1220** and the image sensor **3400.** The second lens **2220** may be disposed between the first lens **2120** and the third lens **2320.** The second lens **2220** may be disposed in the first holder **2210.** The second lens **2220** may be coupled to the first holder **2210.** The second lens **2220** may be fixed to the first holder **2210.** The second lens **2220** may move against the first lens **2120.** The second lens **2220** may move separately from the third lens **2320.**

The second lens **2220** may be a second lens group. The second lens **2220** may comprise a plurality of lenses. The second lens **2220** may comprise two lenses.

The lens driving device **2000** may comprise a second moving part **2300.** The second moving part **2300** may move against the fixed part **2100.** The second moving part **2300** may move separately from the first moving part **2200.** The second moving part **2300** may be disposed at a rear side of the first moving part **2200.** The second moving part **2300** may move in a direction getting closer to and away from the first moving part **2200.**

The lens driving device **2000** may comprise a second holder **2310.** The second moving part **2300** may comprise a second holder **2310.** The second holder **2310** may be disposed inside the housing **2110.** The second holder **2310** may move against the housing **2110.** At least a portion of the second holder **2310** may be spaced apart from the housing **2110.** The second holder **2310** may be in contact with the housing **2110.** The second holder **2310** may be in contact with the housing **2110** when moving. Or, in the initial state, the second holder **2310** may be in contact with the housing **2110.** The second holder **2310** may be in contact with the first holder **2210.** The second holder **2310** may be spaced apart from the first holder **2210.** The second holder **2310** may be in contact with the first holder **2210** when moving. Or, in the initial state, the second holder **2310** may be in contact with the first holder **2210.**

The second holder **2310** may comprise a protrusion **2311.** The protrusion 2311 may be a test protrusion. The protrusion **2311** may be formed on an outer surface of the second holder **2310.** The protrusion **2311** may be protruded from the second holder **2310.** The protrusion **2311** can be seen from the outside through the first hole **2113** of the housing **2110.** The protrusion **2311** may be used to test whether the lens driving device **2000** operates normally. The protrusion **2311** may comprise a flat surface **2311-1** and an inclined surface **2311-2.**

The second holder **2310** may comprise a rail groove **2312.** A ball **2500** may be disposed in the rail groove **2312.** In the rail groove **2312,** the ball **2500** may move by rolling. The rail groove **2312** and the ball **2500** may be in contact at two points. The rail groove **2312** may be disposed in an optical axis direction. The rail groove **2312** may be extended in an optical axis direction.

The rail groove **2312** may comprise a plurality of rail grooves. The rail groove **2312** may comprise four rail grooves. The rail groove **2312** may comprise first to fourth rail grooves. One or more balls **2500** may be disposed in each of the plurality of rail grooves **2312.**

The second holder **2310** may comprise a protrusion **2313.** The protrusion **2313** may be formed on a surface facing the first holder **2210** of the second holder **2310.** The second holder **2310** may comprise a second surface facing the first holder **2210** and a plurality of protrusions **2313** formed on a second surface and being in contact with the second holder **2310.** The protrusion **2313** may be in contact with the first holder **2210** when the second holder **2310** moves in a direction getting closer to the first holder **2210.** At this time, when the protrusion **2313** is formed, the contact area between the second holder **2310** and the first holder **2210** can be reduced compared to the case where the protrusion **2313** is omitted. Through this, the impact and noise generated due to the contact between the second holder **2310** and the first holder **2210** can be minimized.

The lens driving device **2000** may comprise a third lens **2320.** Or, the third lens **2320** may be described as one configuration of the camera device **10** rather than one configuration of the lens driving device **2000.** The second moving part **2300** may comprise a third lens **2320.** The third lens **2320** may be disposed in an optical axis. The third lens **2320** may be disposed between the reflective member **1220** and the image sensor **3400.** The third lens **2320** may be disposed between the second lens **2220** and the image sensor **3400.** The third lens **2320** may be disposed in the second holder **2310.** The third lens **2320** may be coupled to the second holder **2310.** The third lens **2320** may be fixed to the second holder **2310.** The third lens **2320** may move against the first lens **2120.** The third lens **2320** may move separately from the second lens **2220.**

The third lens **2320** may be a third lens group. The third lens **2320** may comprise a plurality of lenses. The third lens **2320** may comprise two lenses.

The lens driving device **2000** may comprise a driving unit **2400.** The driving unit **2400** may move at least some of the plurality of lenses. The driving unit **2400** may move the first moving part **2200** and the second moving part **2300** against the fixed part **2100.** The driving unit **2400** may comprise a coil and a magnet. The driving unit **2400** may move the first moving part **2200** and the second moving part **2300** through electromagnetic interaction. In a modified embodiment, the driving unit **2400** may comprise a shape memory alloy.

The driving unit **2400** may comprise a first driving unit **2410.** The first driving unit **2410** may move the first moving part **2200** against the fixed part **2100.** The first driving unit **2410** may move the first moving part **2200** against the second moving part **2300.** The first driving unit **2410** may be used to drive a zoom function. Or, the first driving unit **2410** may be used to drive an autofocus function.

The first driving unit **2410** may comprise a first driving magnet **2411.** The first driving magnet **2411** may be disposed in the first moving part **2200.** The first driving magnet **2411** may be disposed in the first holder **2210.** The first driving magnet **2411** may be disposed on a side surface of the first holder **2210.** The first driving magnet **2411** may be coupled to the first holder **2210.** The first driving magnet **2411** may be fixed to the first holder **2210.** The first driving magnet **2411** may be fixed to the first holder **2210** by an adhesive. The first driving magnet **2411** may move integrally with the first holder **2210.** The first driving magnet **2411** may be disposed to face the first coil **2412.** The first driving magnet **2411** may face the first coil **2412.** The first driving magnet **2411** may be disposed at a position corresponding to the first coil **2412.** The first driving magnet **2411** may interact with the first coil **2412.** The first driving magnet **2411** may electromagnetically interact with the first coil **2412.**

The first driving magnet **2411** may comprise a first magnet portion **2411-1.** The first magnet portion **2411-1** may have a first polarity. The first driving magnet **2411** may comprise a second magnet portion **2411-2.** The second magnet portion **2411-2** may have a second polarity different from the first polarity. At this time, the first polarity may be an N pole and the second polarity may be an S pole. Conversely, the first polarity may be an S pole and the second polarity may be an N pole.

The first driving magnet **2411** may comprise a neutral portion **2411-3.** The neutral portion **2411-3** may be disposed between the first magnet portion **2411-1** and the second magnet portion **2411-2.** The neutral portion **2411-3** may have a neutral polarity. The neutral portion **2411-3** may be a portion not being magnetized.

The first driving unit **2410** may comprise a first coil **2412.** The first coil **2412** may be disposed on the substrate **2140.** The first coil **2412** may be disposed on the first substrate **2141.** The first coil **2412** may be disposed in the housing **2110.** The first coil **2412** may be disposed at an outer side of the first holder **2210.** When a current is applied to the first coil **2412,** an electromagnetic field is formed around the first coil **2412** to interact with the first driving magnet **2411.**

As a modified embodiment, the first coil **2412** may be disposed on the first holder **2210** and the first driving magnet **2411** may be disposed in the housing **2110.**

The first coil **2412** may be formed in a ring shape. The first coil **2412** may be formed as a square ring or a circular ring. Even when the first coil **2412** is formed in a rectangular ring shape, the corner portion may be formed to be curved. The first coil **2412** may comprise a first portion **2412-1** and a second portion **2412-2** having a gap **G1** therebetween. First and second Hall sensors **2413** and **2414** may be disposed in the gap **G1** of the first coil **2412.**

The lens driving device **2000** may comprise a Hall sensor. The Hall sensor may detect the first driving magnet **2411.** The Hall sensor may comprise a plurality of Hall sensors. The Hall sensor may comprise a first Hall sensor **2413** and a second Hall sensor **2414.** The first Hall sensor **2413** and the second Hall sensor **2414** may be spaced apart from each other. The first Hall sensor **2413** and the second Hall sensor **2414** may be spaced apart to form a gap **G2** therebetween. The first Hall sensor **2413** and the second Hall sensor **2414** may detect the first driving magnet **2411.** The first Hall sensor **2413** and the second Hall sensor **2414** may detect a magnetic force of the first driving magnet **2411.** The first Hall sensor **2413** and the second Hall sensor **2414** may detect the position of the first holder **2210.** The first Hall sensor **2413** and the second Hall sensor **2414** may detect the position of the second lens **2220.**

The lens driving device **2000** may comprise a yoke **2415.** The yoke **2415** may be disposed between the first driving magnet **2411** and the first holder **2210.** The yoke **2415** may be disposed between the first driving magnet **2411** and the first moving part **2200.** The yoke **2415** may be formed in a shape corresponding to the first driving magnet **2411.** The yoke **2415** may increase the interaction force between the first driving magnet **2411** and the first coil **2412.**

The yoke **2415** may comprise an extension portion **2415-1.** The extension portion **2415-1** may surround the front and rear side surfaces of the first driving magnet **2411.** The yoke **2415** may comprise a groove **2415-2.** The groove **2415-2** may be formed in the central portion of the body portion of the yoke **2415.**

The driving unit **2400** may comprise a second driving unit **2420.** The second driving unit **2420** may move the second moving part **2300** against the fixed part **2100.** The second driving unit **2420** may move the second moving part **2300** against the first moving part **2200.** The second driving unit **2420** may be used to drive the auto focus function. Or, the second driving unit **2420** may be used to drive the zoom function.

The second driving unit **2420** may comprise a second driving magnet **2421.** The second driving magnet **2421** may be disposed in the second moving part **2300.** The second driving magnet **2421** may be disposed in the second holder **2310.** The second driving magnet **2421** may be disposed on a side surface of the second holder **2310.** The second driving magnet **2421** may be coupled to the second holder **2310.** The second driving magnet **2421** may be fixed to the second holder **2310.** The second driving magnet **2421** may be fixed to the second holder **2310** by an adhesive. The second driving magnet **2421** may move integrally with the second holder **2310.** The second driving magnet **2421** may be disposed to face the second coil **2422.** The second driving magnet **2421** may face the second coil **2422.** The second driving magnet **2421** may be disposed at a position corresponding to the second coil **2422.** The second driving magnet **2421** may interact with the second coil **2422.** The second driving magnet **2421** may electromagnetically interact with the second coil **2422.**

The second driving unit **2420** may comprise a second coil **2422.** The second coil **2422** may be disposed on the substrate **2140.** The second coil **2422** may be disposed on the second substrate **2142.** The second coil **2422**2 may be disposed in the housing **2110.** The second coil **2422** may be disposed outside the second holder **2310.** When a current is applied to the second coil **2422,** an electromagnetic field is formed around the second coil **2422** to interact with the second driving magnet **2421.**

As a modified embodiment, the second coil **2422** may be disposed on the second holder **2310** and the second driving magnet **2421** may be disposed on the housing **2110.**

The lens driving device **2000** may comprise a Hall sensor. The Hall sensor may detect the second driving magnet **2421.** The Hall sensor may comprise a plurality of Hall sensors. The Hall sensor may comprise a third Hall sensor **2423** and a fourth Hall sensor **2424.** The third Hall sensor **2423** and the fourth Hall sensor **2424** may be spaced apart from each other. The third Hall sensor **2423** and the fourth Hall sensor **2424** may be spaced apart to form a gap **G2** therebetween. The third Hall sensor **2423** and the fourth Hall sensor **2424** may detect the second driving magnet **2421.** The third Hall sensor **2423** and the fourth Hall sensor **2424** may detect a magnetic force of the second driving magnet **2421.** The third Hall sensor **2423** and the fourth Hall sensor **2424** may detect the position of the second holder **2310.** The third Hall sensor **2423** and the fourth Hall sensor **2424** may detect the position of the third lens **2320.**

The lens driving device **2000** may comprise a yoke **2425.** The yoke **2425** may be disposed between the second driving magnet **2421** and the second holder **2310.** The yoke **2425** may be formed to have a shape corresponding to that of the second driving magnet **2421.** The yoke **2425** may increase the interaction force between the second driving magnet **2421** and the second coil **2422.**

The lens driving device **2000** may comprise a first yoke **2430.**

The first yoke **2430** may be disposed such that an attractive force acts between the first yoke **2430** and the first driving magnet **2411.** The first yoke **2430** may be disposed in the housing **2110.** The first yoke **2430** may be disposed on the substrate **2140.** The first yoke **2430** may be disposed on the first substrate **2141.** The first holder **2210** may press the ball **2500** toward the guide rail **2130** by an attractive force between the first driving magnet **2411** and the first yoke **2430.** That is, the ball **2500** may be maintained between the first holder **2210** and the guide rail **2130** without being separated and removed by the attractive force between the first driving magnet **2411** and the first yoke **2430.**

The lens driving device **2000** may comprise a second yoke **2440.** The second yoke **2440** may be a magnetic material. The second yoke **2440** may be disposed such that an attractive force acts between the second yoke **2440** and the second driving magnet **2421.** The second yoke **2440** may be disposed in the housing **2110.** The second yoke **2440** may be disposed on the substrate **2140.** The second yoke **2440** may be disposed on the second substrate **2142.** The second holder **2310** may press the ball **2500** toward the guide rail **2130** by an attractive force between the second driving magnet **2421** and the second yoke **2440.** That is, the ball **2500** may be maintained between the second holder **2310** and the guide rail **2130** without being separated and removed by the attractive force between the second driving magnet **2421** and the second yoke **2440.**

The lens driving device **2000** may comprise a ball **2500.** The ball **2500** may guide the movement of the first holder **2210.** The ball **2500** may be disposed between the guide rail **2130** and the moving parts **2200** and 2300. The ball **2500** may be disposed between the first holder **2210** and the guide rail **2130.** The ball **2500** may guide the movement of the second holder **2310.** The ball **2500** may be disposed between the second holder **2310** and the guide rail **2130.** The ball **2500** may be formed in a spherical shape. The ball **2500** may roll over the rail groove **2212** of the first holder **2210** and the rail **2133** of the guide rail **2130.** The ball **2500** may move in an optical axis direction between the rail groove **2212** of the first holder **2210** and the rail **2133** of the guide rail **2130.** The ball **2500** may roll over the rail groove **2312** of the second holder **2310** and the rail **2133** of the guide rail **2130.** The ball **2500** may move in an optical axis direction between the rail groove **2312** of the second holder **2310** and the rail **2133** of the guide rail **2130.** The ball **2500** may comprise a plurality of balls. The ball **2500** may be provided a total of eight, four in the first holder **2210** and four in the second holder **2310.**

The lens driving device **2000** may comprise a dummy glass **2600.** The dummy glass **2600** may be disposed in the housing **2110.** The dummy glass **2600** may close the rear opening of the housing **2110.** The dummy glass **2600** may be formed to be transparent to allow light to pass therethrough.

The lens driving device **2000** may comprise a poron **2700.** The poron **2700** may be a shock absorbing member. The poron **2700** can minimize the shock and noise generated by the movement of the first holder **2210** and the second holder **2310.** The poron **2700** may be disposed at a portion where the first holder **2210** collides with the housing **2110.** The poron **2700** may be disposed at a portion where the second holder **2310** collides with the housing **2110.**

FIGS. 53 to 55 are diagrams for explaining implementation of a zoom function and an autofocus function of a lens driving device according to the present embodiment.

In the present embodiment, the first lens **2120,** the second lens **2220,** and the third lens **2320** may be disposed in a state aligned with the optical axis **OA** in the initial state in which current is not supplied to the driving unit **2400** (refer to FIG. 53).

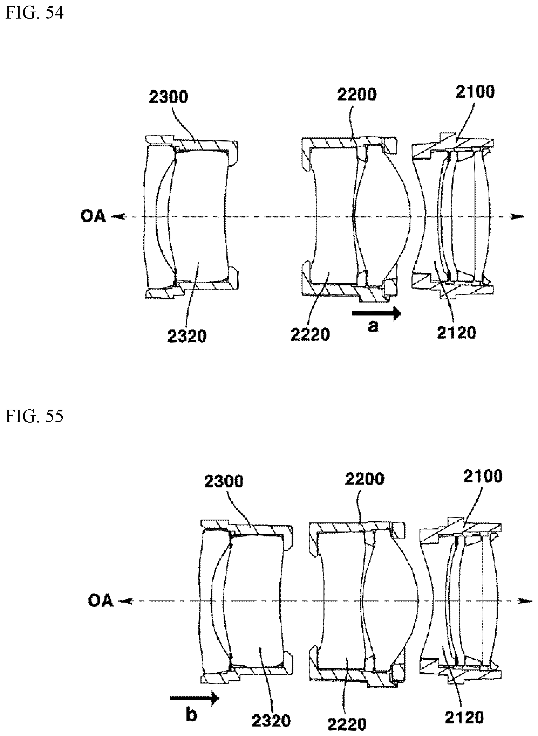

At this time, when a current is applied to the first coil **2412,** the second lens **2220** may move along the optical axis **OA** due to electromagnetic interaction between the first coil **2412** and the first driving magnet **2411** (refer to a in FIG. 54). As the second lens **2220** moves while the first lens **2120** is being fixed, a zoom function may be performed. When a current in a first direction is applied to the first coil **2412,** the second lens **2220** may move in a direction getting closer to the first lens **2120.** When a current in a second direction opposite to the first direction is applied to the first coil **2412,** the second lens **2220** may move in a direction getting away from the first lens **2120.**

Meanwhile, when a current is applied to the second coil **2422,** the third lens **2320** may move along the optical axis **OA** due to electromagnetic interaction between the second coil **2422** and the second driving magnet **2421** (refer to FIG. 55 **b**). An auto focus (AF) function may be performed by relative movement of the third lens **2320** against the first lens **2120** and the second lens **2220.** When a current in a first direction is applied to the second coil **2422,** the third lens **2320** may move in a direction getting closer to the first lens **2120,** and when a current in a second direction opposite to the first direction is applied to the second coil **2422,** the third lens **2320** may move in a direction getting away from the first lens **2120.**

Hereinafter, a camera device according to the present embodiment will be described with reference to the drawings.

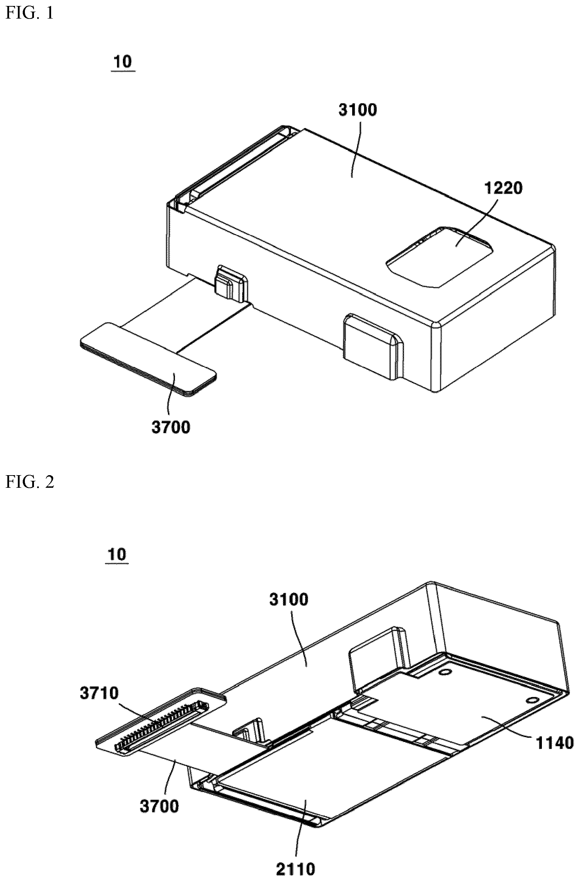

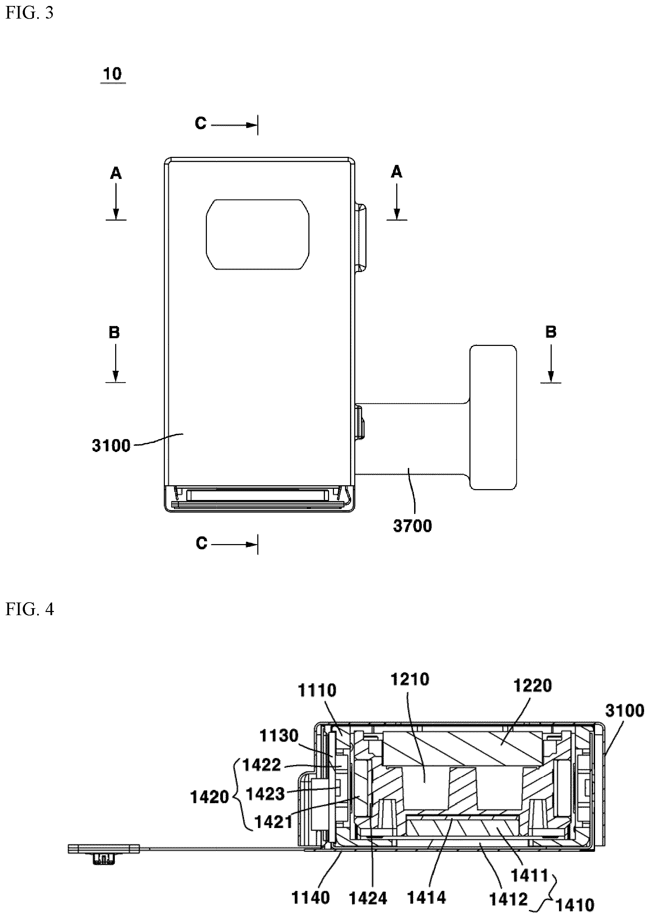

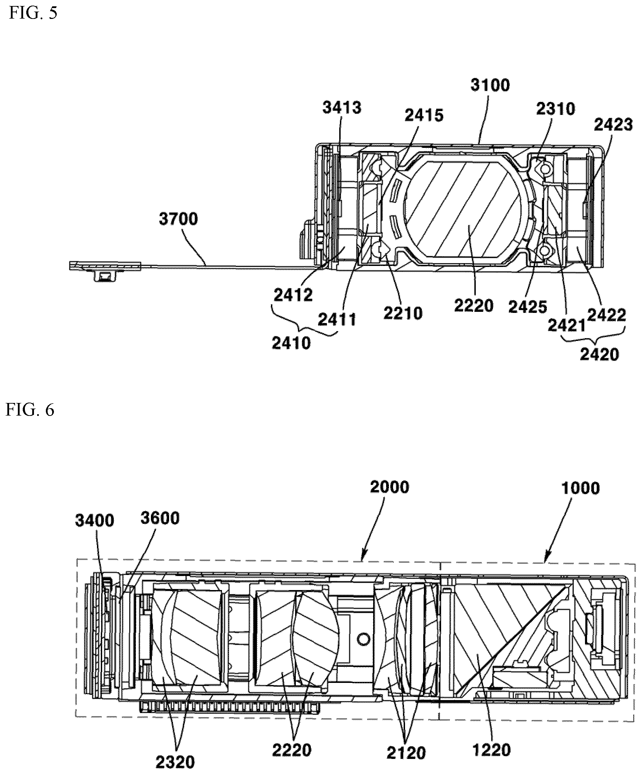

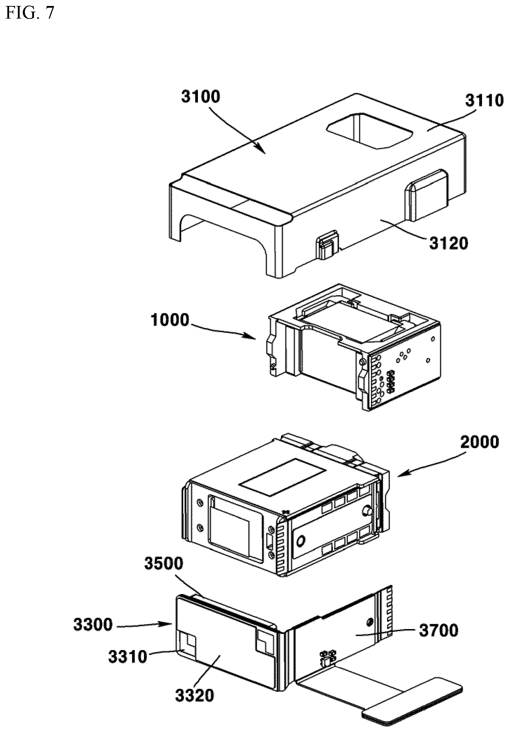

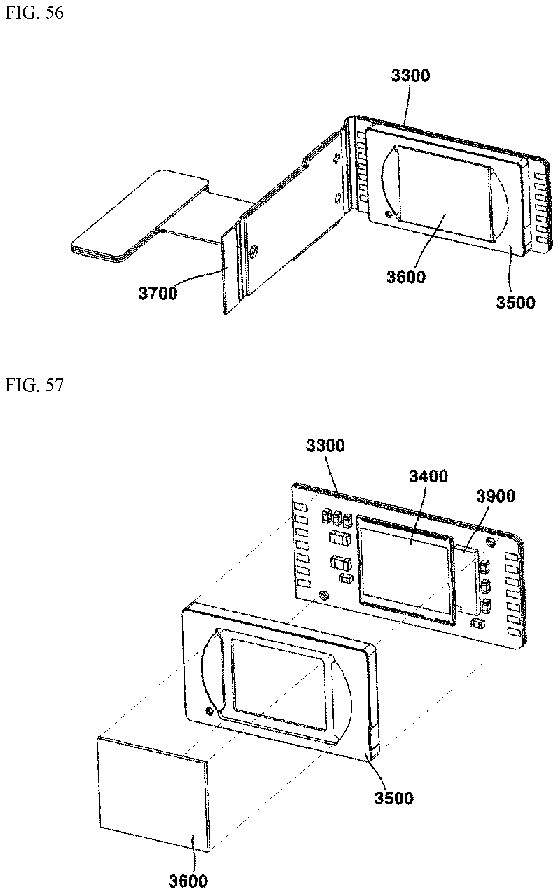

FIG. 1 is a perspective view of a camera device according to the present embodiment; FIG. 2 is a bottom perspective view of a camera device according to the present embodiment; FIG. 3 is a flat surface diagram of a camera device according to the present embodiment; FIG. 4 is a cross-sectional view taken along line A-A of FIG. 3; FIG. 5 is a cross-sectional view taken along line B-B of FIG. 3; FIG. 6 is a cross-sectional view taken along line C-C of FIG. 3; FIG. 7 is an exploded perspective view of a camera device according to the present embodiment; FIG. 8 is a perspective view in which the cover member is omitted from a camera device according to the present embodiment; FIG. 56 is a perspective view of a partial configuration of a camera device according to the present embodiment; and FIG. 57 is an exploded perspective view of an image sensor, a filter, and a related configuration of a camera device according to the present embodiment.

The camera device **10** may comprise a cover member **3100.** The cover member **3100** may be a 'cover can' or a 'shield can'. The cover member **3100** may be disposed to cover the reflective member driving device **1000** and the lens driving device **2000.** The cover member **3100** may be disposed at an outer side of the reflective member driving device **1000** and the lens driving device **2000.** The cover member **3100** may surround the reflective member driving device **1000** and the lens driving device **2000.** The cover member **3100** may accommodate the reflective member driving device **1000** and the lens driving device **2000.** The cover member **3100** may be formed of a metal material. The cover member **3100** may block electromagnetic interference (EMI).

The cover member **3100** may comprise an upper plate **3110.** The upper plate **3110** may comprise an opening or a hole. Light may be incident through the opening or hole of the upper plate **3110.** An opening or a hole in the upper plate **3110** may be formed at a position corresponding to the reflective member **1220.**

The cover member **3100** may comprise a side plate **3120.** The side plate **3120** may comprise a plurality of side plates. The side plate **3120** may comprise four side plates. The side plate **3120** may comprise first to fourth side plates. The side plate **3120** may comprise first and second side plates disposed opposite to each other, and third and fourth side plates disposed opposite to each other.

The camera device **10** may comprise a printed circuit board **3300** (PCB). The printed circuit board **3300** may be a board or a circuit board. A sensor base **3500** may be disposed on the printed circuit board **3300.** The printed circuit board **3300** may be electrically connected to the reflective member driving device **1000** and the lens driving device **2000.** The printed circuit board **3300** may be provided with various circuits, elements, control units, and the like to convert an image formed on the image sensor **3400** into an electrical signal and transmit it to an external device.

The printed circuit board **3300** may comprise a marking unit **3310.** The marking unit **3310** may be disposed on the rear surface of the printed circuit board **3300.**

The camera device **10** may comprise a suspension (SUS) **3320.** The suspension **3320** may be disposed on a rear surface of the printed circuit board **3300.** The suspension **3320** may reinforce the strength of the printed circuit board **3300.** The suspension **3320** may radiate heat generated in the printed circuit board **3300.**

The camera device **10** may comprise an image sensor **3400.** The image sensor **3400** may be disposed on the printed circuit board **3300.** Light passing through the lens and filter **3600** may be incident to the image sensor **3400** to form an image. The image sensor **3400** may be electrically connected to the printed circuit board **3300.** For example, the image sensor **3400** may be coupled to the printed circuit board **3300** by a surface mounting technology (SMT). As another example, the image sensor **3400** may be coupled to the printed circuit board **3300** by flip chip technology. The image sensor **3400** may be disposed so that the lens and the optical axis coincide. The optical axis of the image sensor **3400** and the optical axis of the lens may be aligned. The image sensor **3400** may convert light irradiated to the effective image area of the image sensor **3400** into an electrical signal. The image sensor **3400** may comprise any one or more among a charge coupled device (CCD), a metal oxide semi-conductor (MOS), a CPD, and a CID.

The camera device **10** may comprise a sensor base **3500.** The sensor base **3500** may be disposed on the printed circuit board **3300.** A filter **3600** may be disposed on the sensor base **3500.** An opening may be formed in a portion of the sensor base **3500** where the filter **3600** is disposed so that light passing through the filter **3600** may be incident on the image sensor **3400.**

The camera device **10** may comprise a filter **3600.** The filter **3600** may serve to block light of a specific frequency band from being incident on the image sensor **3400** in light passing through the lens. The filter **3600** may be disposed between the lens and the image sensor **3400.** The filter **3600** may be disposed on the sensor base **3500.** The filter **3600** may comprise an infrared filter. The infrared filter may block light in the infrared region from being incident on the image sensor **3400.**

The camera device **10** may comprise a substrate **3700.** The substrate **3700** may be connected to the printed circuit board **3300.** The substrate **3700** may be extended from the printed circuit board **3300.** The substrate **3700** may comprise a terminal electrically connected to the reflective member driving device **1000.** The substrate **3700** may comprise an extension portion being extended outward.

The camera device **10** may comprise a connector **3710.** The connector **3710** may be disposed on the board **3700.** The connector **3710** may be disposed on a lower surface of the extension portion of the board **3700.** The connector **3710** may be connected to, for example, a power supply unit of a smartphone.

The camera device **10** may comprise a temperature sensor **3800.** The temperature sensor **3800** may detect a temperature. The temperature detected by the temperature sensor **3800** may be used for more accurate control of any one or more among a handshake correction function, an autofocus function, and a zoom function.

The camera device **10** may comprise a driver IC **3900.** The driver IC **3900** may be electrically connected to the lens driving device **2000.** The driver IC **3900** may be described as one configuration of the lens driving device **2000.** The driver IC **3900** may be electrically connected to the first coil **2412** and the second coil **2422** of the lens driving device **2000.** The driver IC **3900** may supply current to the first coil **2412** and the second coil **2422** of the lens driving device **2000.** The driver IC **3900** may control at least one of a voltage or a current applied to each of the first coil **2412** and the second coil **2422** of the lens driving device **2000.** The driver IC **3900** may be electrically connected to the Hall sensors **2413, 2414, 2423,** and **2424.** The driver IC **3900** may perform feedback control of the voltage and current applied to the first coil **2412** and the second coil **2422** through the positions of the second lens **2220** and the third lens **2320** detected by the Hall sensors **2413, 2414, 2423,** and **2424.**

Hereinafter, an optical device according to the present embodiment will be described with reference to the drawings.

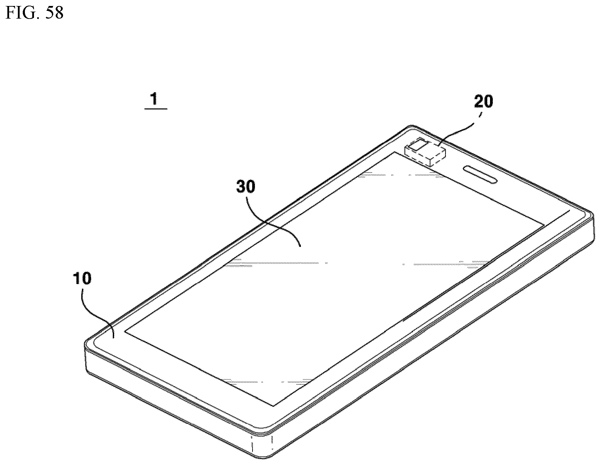

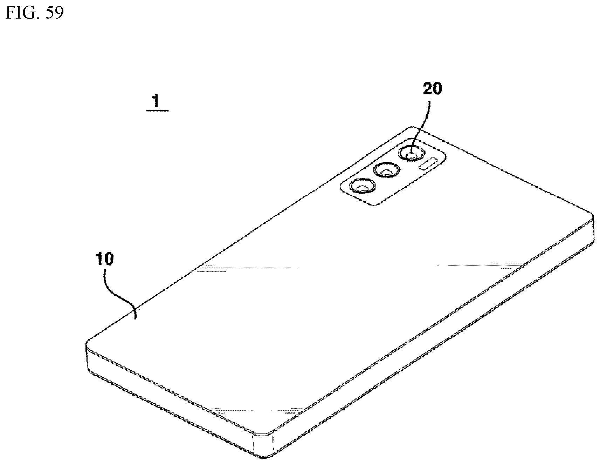

FIG. 58 is a perspective view of the front side of an optical device according to the present embodiment; and FIG. 59 is a perspective view of a rear surface of an optical device according to the present embodiment.

The optical device **1** may comprise any one or more among a hand phone, a mobile phone, a portable terminal, a mobile terminal, a smart phone, a smart pad, a portable smart device, a digital camera, a laptop computer, a digital broadcasting terminal, personal digital assistants (PDA), portable multimedia player (PMP), and navigation. The optical device 1 may comprise any device for photographing an image or a photo.

The optical device 1 may comprise a main body **20.** The optical device **1** may comprise a camera device **10.** The camera device **10** may be disposed in the main body **20.** The camera device **10** may photograph a subject. The optical device **1** may comprise a display **30.** The display **30** may be disposed on the main body **20.** The display **30** may output any one or more of a video and an image photographed by the camera device **10.** The display **30** may be disposed on a first surface of the main body **20.** The camera device **10** may be disposed on any one or more of the first surface of the main body **20** and the second surface opposite to the first surface.

The camera device **10** according to the present embodiment may be a folded camera module. The folded camera module may have an angle of view of 15 degrees to 40 degrees. The folded camera module may have a focal length of 18 mm to 20 mm or more. The folded camera module may be used as a rear camera of the optical device **1.** A main camera having an angle of view of 70 degrees to 80 degrees may be disposed on the rear surface of the optical device **1.** At this time, the folded camera can be disposed next to the main camera. That is, the camera device **10** according to the present embodiment may be applied to any one or more of a plurality of rear cameras of the optical device **1.** The camera device **10** according to the present embodiment may be applied to one camera among the rear cameras such as two, three, four or more of the optical device **1.**

Meanwhile, the camera device **10** according to the present embodiment may be disposed on the front surface of the optical device **1.** However, when the front camera of the optical device **1** is one, a wide-angle camera may be applied. When there are two or more of front cameras in the optical device **1,** one of them may be a telescopic camera as in the present embodiment. However, since the focal length is shorter than that of the rear telescopic camera, a normal camera module that does not comprise a reflective member rather than a folded camera module may be applied.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. An actuator device comprising:
a housing;
a holder disposed in the housing;
a reflective member disposed on the holder;
a moving plate disposed between the housing and the holder;
a rigid mover coupled to the holder;
a first magnet disposed on the rigid mover;
a second magnet disposed on the housing and generating a repulsive force with the first magnet; and
a driving unit configured to tilt the holder,
wherein, with respect to a first optical axis, a central axis of the first magnet is disposed to be eccentric with a central axis of the moving plate.

2. The actuator device of claim 1, wherein, with respect to facing surfaces, a horizontal axis passing through the central axis of the first magnet is eccentric with a horizontal axis passing through the central axis of the moving plate in a direction of a second optical axis perpendicular to the first optical axis.

3. The actuator device of claim 2, wherein, with respect to the facing surfaces, a vertical axis passing through the central axis of the first magnet is not eccentric with a vertical axis passing through the central axis of the moving plate in a direction of the horizontal axis.

4. The actuator device of claim 1, wherein a portion of the housing is disposed between the moving plate and the rigid mover.

5. The actuator device of claim 1, wherein the housing comprises two holes into which the rigid mover is inserted.

6. The actuator device of claim 2, wherein the horizontal axis of the first magnet is disposed higher than the horizontal axis of the moving plate.

7. The actuator device of claim 1, wherein at least a portion of the second magnet is disposed between the first magnet and the moving plate.

8. The actuator device of claim 1, wherein the moving plate is disposed between the rigid mover and the holder.

9. The actuator device of claim 1, wherein the driving unit comprises a first driving unit and a second driving unit,
wherein the first driving unit comprises a first driving magnet and a first coil, and
wherein the second driving unit comprises a second driving magnet and a second coil.

10. An actuator device comprising:
a fixed part;
a moving part configured to move against the fixed part;
a moving plate disposed between the fixed part and the moving part;
a first magnet disposed on the moving part;
a second magnet disposed on the fixed part and generating a repulsive force with the first magnet; and
a driving unit configured to tilt the moving unit with respect to x-axis and y-axis perpendicular to each other of the moving plate,
wherein, in a direction of the y-axis, a horizontal axis passing through a center of the second magnet is disposed to be eccentric with the x-axis of the moving plate.
